# EUROPÄISCHE PATENTSCHRIFT

(11) **EP 2 570 217 B1**
(45) Veröffentlichungstag und Bekanntmachung des Hinweises auf die Patenterteilung: **05.11.2014**
(21) Anmeldenummer: 11181521.3
(22) Anmeldetag: 15.09.2011
(51) Int. Cl.: B23F 5/16

(54) **Semi-Completing Wälzschälverfahren und Vorrichtung mit entsprechendem Wälzschälwerkzeug zum Ausführen eines Semi-Completing Wälzschälverfahrens**
Semi-completing skiving method and device with skiving tool for performing a semi-completing skiving method
Procédé d'écroutage semi-complet et dispositif doté d'un outil d'écroutage associé pour développer un procédé d'écroutage semi-complet

(43) Veröffentlichungstag der Anmeldung: 20.03.2013
(73) Patentinhaber: Klingelnberg AG, 8050 Zürich (CH)
(72) Erfinder: Marx, Hartmut, 40223 Düsseldorf (DE); Vogel, Olaf, 76275 Ettlingen (DE)
(74) Vertreter: OK pat AG

(56) Entgegenhaltungen:
- DE-C- 243 514
- US-A- 2 091 575

## Beschreibung

### Gebiet der Erfindung

Gegenstand der Erfindung ist ein Verfahren zum Semi-Completing-Wälzschälen einer Verzahnung oder einer anderen periodischen Struktur und eine Vorrichtung mit einem entsprechenden Wälzschälwerkzeug zum Ausführen eines Semi-Completing Wälzschälverfahrens.

### Hintergrund der Erfindung, Stand der Technik

Es gibt zahlreiche Verfahren zur Fertigung von Zahnrädern. Bei der spanenden Weichvorbearbeitung unterscheidet man Wälzfräsen (im Englischen hobbing genannt), Wälzstossen (im Englischen gear shaping genannt), Wälzhobeln (im Englischen generating planing genannt) und Wälzschälen (im Englischen power skiving genannt). Das Wälzfräsen und Wälzschälen sind sogenannte kontinuierliche Verfahren, wie im Folgenden näher erläutert wird.

Bei der spanenden Herstellung von Zahnrädern unterscheidet man zwischen dem Einzelteilverfahren (auch intermittierendes Teilverfahren und im Englischen intermitted indexing process oder single indexing process genannt) und dem kontinuierlichen Verfahren, das teilweise auch als kontinuierliches Teilungsverfahren (im Englischen continuous indexing process, oder face hobbing genannt) bezeichnet wird.

Beim kontinuierlichen Verfahren kommt beispielsweise ein Werkzeug mit entsprechenden Messern zum Einsatz, um die Flanken eines Werkstücks zu schneiden. Das Werkstück wird in einer Aufspannung kontinuierlich, d.h. im pausenlosen Verfahren fertig geschnitten. Das kontinuierliche Verfahren basiert auf komplexen, gekoppelten Bewegungsabläufen, bei denen das Werkzeug und das zu bearbeitende Werkstück relativ zueinander eine kontinuierliche Teilungsbewegung ausführen. Die Teilungsbewegung ergibt sich aus dem koordinierten, respektive gekoppelten Antreiben mehrere Achsantriebe einer entsprechenden Maschine.

Beim Einzelteilverfahren wird eine Zahnlücke bearbeitet, dann erfolgen zum Beispiel eine relative Bewegung des Werkzeugs und eine sogenannte Teilungsbewegung (Teilungsdrehung), bei der sich das Werkstück relativ zum Werkzeug dreht, bevor dann die nächste Zahnlücke bearbeitet wird. Es wird so Schritt für Schritt ein Zahnrad gefertigt.

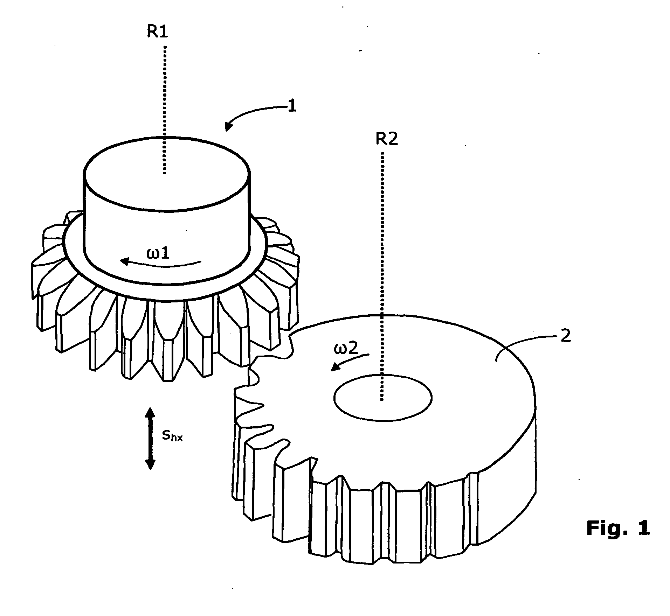

Das eingangs genannte Wälzstossverfahren kann durch ein Zylinderradgetriebe beschrieben oder dargestellt werden, da der Kreuzungswinkel (auch Achskreuzwinkel genannt) zwischen der Rotationsachse R1 des Stosswerkzeugs 1 und der Rotationsachse R2 des Werkstücks 2 Null Grad beträgt, wie in Fig. 1 schematisch dargestellt. Die beiden Rotationsachsen R1 und R2 verlaufen parallel, wenn der Achskreuzwinkel Null Grad beträgt. Das Werkstück 2 und das Stosswerkzeug 1 drehen sich kontinuierlich um ihre Rotationsachsen R2, bzw. R1. Das Stosswerkzeug 1 macht zusätzlich zu der Drehbewegung eine Hubbewegung, die in Fig. 1 durch den Doppelpfeil sₕₓ bezeichnet ist, und nimmt bei dieser Hubbewegung Späne vom Werkstück 2 ab.

Vor einiger Zeit wurde ein Verfahren erneut aufgegriffen, das als Wälzschälen bezeichnet wird. Die Grundlagen sind circa 100 Jahre alt. Eine erste Patentanmeldung mit der Nummer DE 243514 zu diesem Thema geht auf das Jahr 1912 zurück. Nach den ursprünglichen Überlegungen und Untersuchungen der Anfangsjahre wurde das Wälzschälen nicht mehr ernsthaft weiter verfolgt. Es waren bisher aufwendige Prozesse, die teilweise empirisch waren, notwendig, um eine geeignete Werkzeuggeometrie für das Wälzschälverfahren zu finden.

Ungefähr Mitte der 1980er Jahre wurde das Wälzschälen erneut aufgegriffen. Erst mit den heutigen Simulationsverfahren und den modernen CNC-Steuerungen der Maschinen, konnte das Prinzip des Wälzschälens in ein produktives, reproduzierbares und robustes Verfahren umgesetzt werden. Hinzu kommen die hohe Verschleißfestigkeit heutiger Werkzeugmaterialien, die enorm hohe statische und dynamische Steifigkeit und die hohe Güte des Synchronlaufs der modernen Maschinen.

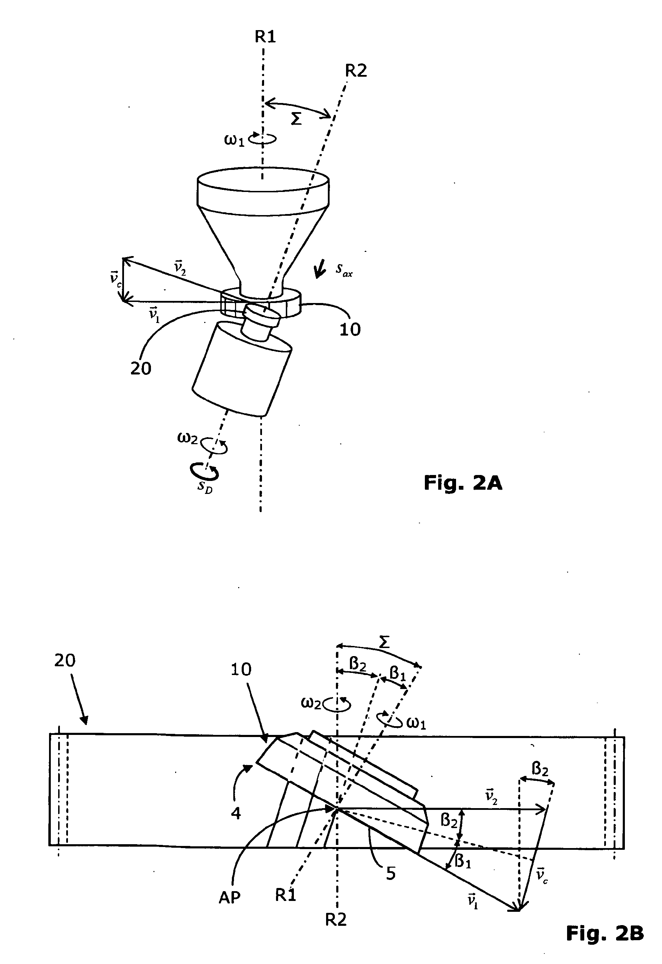

Beim Wälzschälen wird nun, wie in Fig. 2A gezeigt, ein Achskreuzwinkel Σ zwischen der Rotationsachse R1 des Wälzschälzeugs 10 (auch als Schälrad bezeichnet) und der Rotationsachse R2 des Werkstücks 20 vorgegeben, der ungleich Null ist. Die resultierende Relativbewegung zwischen dem Wälzschälwerkzeug 10 und dem Werkstück 20 ist eine Schraubbewegung, die in einen Drehanteil (rotatorischer Anteil) und einen Schubanteil (translatorischer Anteil) zerlegt werden kann. Als antriebstechnisches Analogon kann ein Wälzschraubgetriebe betrachtet werden, wobei der Drehanteil dem Wälzen und der Schubanteil dem Gleiten der Flanken entspricht. Um so größer der Achskreuzwinkel Σ betragsmäßig ist, um so mehr nimmt der für die Bearbeitung des Werkstücks 20 notwendige translatorische Bewegungsanteil zu. Er bewirkt nämlich eine Bewegungskomponente der Schneiden des Wälzschälwerkzeugs 10 in Richtung der Zahnflanken des Werkstücks 20. Beim Wälzschälen wird somit der Gleitanteil der kämmenden Relativbewegung der im Eingriff stehenden Zahnräder des Schraubradersatzgetriebes ausgenutzt, um die Schnittbewegung auszuführen. Beim Wälzschälen ist nur ein langsamer Axialvorschub sₐₓ (auch axialer Vorschub genannt) parallel zur Rotationsachse R2 des Werkstücks 20 erforderlich und es entfällt die sogenannte Stossbewegung, die für das Wälzstossen typisch ist. Beim Wälzschälen tritt somit auch keine Rückhubbewegung auf.

Die Schnittgeschwindigkeit beim Wälzschälen wird direkt von der Drehzahl des Wälzschälwerkzeugs 10 bzw. des Werkstücks 20 und von dem verwendeten Achskreuzwinkel Σ der Rotationsachsen R1 und R2 beeinflusst. Der Achskreuzwinkel Σ und damit der Gleitanteil sollte so gewählt werden, dass für die Bearbeitung des Materials bei gegebener Drehzahl eine optimale Schnittgeschwindigkeit erzielt wird.

Die Bewegungsabläufe und weitere Details eines vorbekannten Wälzschälverfahrens sind der bereits erwähnten schematischen Darstellung in Fig. 2A zu entnehmen. Fig. 2A zeigt das Wälzschälen einer Außenverzahnung an einem zylindrischen Werkstück 20. Das Werkstück 20 und das Werkzeug 10 (hier ein zylindrisches Wälzschälwerkzeug 10) rotieren in entgegengesetzter Richtung, wie in Fig. 2A z.B. anhand der Winkelgeschwindigkeiten ω₁ und ω₂ zu erkennen ist.

Hinzu kommen weitere Relativbewegungen. Es ist der bereits erwähnte Axialvorschub sₐₓ erforderlich, um die gesamte Verzahnbreite des Werkstücks 20 mit dem Werkzeug 10 bearbeiten zu können. Der Axialvorschub bewirkt eine Verschiebung des Werkzeugs 10 gegenüber dem Werkstück 20 in paralleler Richtung zur Rotationsachse R2 des Werkstücks 20. Die Richtung dieser Bewegung des Werkzeugs 10 ist in Fig. 2A mit sₐₓ gekennzeichnet. Falls am Werkstück 20 eine Schrägverzahnung erwünscht ist (d.h. ß₂≠0), wird dem Axialvorschub sₐₓ ein Differentialvorschub s_{D} überlagert, welcher, wie in Fig. 2A gekennzeichnet, einer zusätzlichen Drehung des Werkstücks 20 um seine Rotationsachse R2 entspricht. Der Differentialvorschub s_{D} und der Axialvorschub sₐₓ werden am Auslegungspunkt derart aufeinander abgestimmt, dass der resultierende Vorschub des Werkzeugs 10 gegenüber dem Werkstück 20 in Richtung der zu erzeugenden Zahnlücke erfolgt. Zusätzlich kann ein Radialvorschub s_{rad} eingesetzt werden, um etwa die Balligkeit der Verzahnung des Werkstücks 20 zu beeinflussen.

Beim Wälzschälen ergibt sich der Vektor der Schnittgeschwindigkeit *v̅_{c}* im Wesentlichen als Differenz der beiden um den Achskreuzwinkel Σ zueinander geneigten Geschwindigkeitsvektoren *̅v̅*̅₁ und *̅v̅*̅₂ der Rotationsachsen R1, R2 von Werkzeug 10 und Werkstück 20. *̅v̅*̅₁ ist der Geschwindigkeitsvektor am Umfang des Werkzeugs 10 und *̅v̅*̅₂ ist der Geschwindigkeitsvektor am Umfang des Werkstücks 20. Die Schnittgeschwindigkeit *v_{c}* des Wälzschälprozesses kann durch den Achskreuzwinkel Σ und die Drehzahl im Schraubradersatzgetriebe verändert werden. Der wie bereits erwähnt relativ langsame Axialvorschub sₐₓ hat beim Wälzschälverfahren nur einen kleinen Einfluss auf die Schnittgeschwindigkeit *v_{c}*, der vernachlässigt werden kann. Deshalb ist der Axialvorschub sₐₓ in dem Vektordiagram mit den Vektoren *̅v̅*̅₁, *̅v̅*̅₂ und *v̅_{c}* in Fig. 2A nicht berücksichtigt.

In Fig. 2B ist das Wälzschälen einer Außenverzahnung eines Werkstücks 20 mit einem konischen Wälzschälwerkzeug 10 gezeigt. In Fig. 2B sind wiederum der Achskreuzwinkel Σ, der Vektor der Schnittgeschwindigkeit *̅v̅*̅_{c}, die Geschwindigkeitsvektoren *̅v̅*̅₁ am Umfang des Werkzeugs 10 und *̅v̅*̅₂ am Umfang des Werkstücks 20, sowie der Schrägungswinkels ß₁ des Werkzeugs 10 und der Schrägungswinkel ß₂ des Werkstücks 20 gezeigt. Der Schrägungswinkel ß₂ ist hier ungleich Null. Der Zahnkopf des Werkzeugs 10 ist in Fig. 2B mit dem Bezugszeichen 4 gekennzeichnet. Die Zahnbrust ist in Fig. 2B mit dem Bezugszeichen 5 gekennzeichnet. Die beiden Rotationsachsen R1 und R2 schneiden sich nicht, sondern sind windschief zueinander angeordnet. Bei einem konischen Wälzschälwerkzeug 10 wird der Auslegungspunkt AP üblicherweise auf dem Gemeinlot der beiden Rotationsachsen R1 und R2 gewählt, da ein Ankippen des Wälzschälwerkzeugs 10 zur Beschaffung von Freiwinkeln nicht notwendig ist. Der Auslegungspunkt AP fällt hier mit dem sogenannten Berührpunkt BP zusammen. In diesem Auslegungspunkt AP berühren sich die Wälzkreise des Schraubwälzersatzgetriebes.

Beim Wälzschälen kommt ein Werkzeug 10 zum Einsatz, das mindestens eine geometrisch bestimmte Flankenschneide umfasst. Die Flankenschneide/Flankenschneiden sind in Fig. 2A und Fig. 2B nicht gezeigt. Die Form und Anordnung der Flankenschneiden gehören zu denjenigen Aspekten, die in der Praxis bei einer konkreten Auslegung berücksichtigt werden müssen.

Ausserdem kommt dem Werkzeug selbst beim Wälzschälen eine große Bedeutung zu. Das Wälzschälwerkzeug 10 hat in dem in Fig. 2A gezeigten Beispiel die Form eines geradverzahnten Stirnrads. Die Außenkontur des Grundkörpers in Fig. 2A ist zylindrisch. Sie kann aber auch kegelig (auch konisch genannt) sein, wie in Fig. 2B gezeigt. Da der oder die Zähne des Wälzschälwerkzeugs 10 über die gesamte Länge der Flankenschneide in Eingriff kommen, benötigt jeder Zahn des Werkzeugs 10 an der Flankenschneide einen ausreichenden Freiwinkel.

Es ist bekannt, dass man beim Wälzschälen einen sogenannten Semi-Completing Ansatz verfolgen kann. Als Semi-Completing Verfahren wird ein Ansatz bezeichnet, bei dem in einem ersten Schnitt sowohl rechte als auch linke Flanken von Zahnlücken bearbeitet, aber nur die Geometrien der rechten oder linken Flanken fertig bearbeitet werden. Dann wird in einem zweiten Schnitt, nachdem die Maschineneinstellung verändert wurde, eine der beiden Flanken nachbearbeitet, um die gewünschte Lückenweite und Zahngeometrie zu erhalten. Ein Grund für das Anwenden eines Semi-Completing Verfahrens wird darin gesehen, dass die Flanken freier gestaltet werden können. D.h. es sind sogenannte Flankenmodifikationen einfacher möglich als beim Completing Verfahren. Ausserdem kann beim Semi-Completing auch die Zahndicke korrigiert werden, indem die Lückenweite durch ein einfaches Verdrehen des Werkrades verändert wird.

Das Semi-Completing Verfahren ist für Kegelräder ursprünglich vom Schleifen im Einzelteilverfahren von im Zyklo-Palloid®-Verfahren vorgefrästen Verzahnungen bekannt.

Eigene Untersuchungen bisheriger Wälzschälverfahren haben gezeigt, dass es je nach Auslegung der Wälzschälwerkzeuge 10 zu einem deutlichen Verschleiß des Wälzschälwerkzeugs 10 kommen kann. Diese Feststellung gilt auch für die Anwendung des Semi-Completing Ansatzes auf das Wälzschälen. Es werden daher Lösungen gesucht, die es ermöglichen den Verschleiß der Wälzschälwerkzeuge 10 zu reduzieren, respektive die Standzeit der Wälzschälwerkzeuge 10 zu verbessern. Durch einen reduzierten Verschleiß wird das Wälzschälverfahren wirtschaftlicher, da die Herstellkosten beim Verzahnen von Werkstücken 20 wesentlich durch die Werkzeugstandzeiten beeinflusst werden.

Aufgabe der vorliegenden Erfindung ist es, ein Verfahren und eine Vorrichtung zum spanenden Bearbeiten der Zahnflanken eines Zahnrades oder anderer periodischer Strukturen bereitzustellen, das sich durch eine Reduktion der Produktionskosten pro Zahnrad oder Werkstück auszeichnet.

Insbesondere geht es darum, eine möglichst hohe Werkzeugstandzeit zu gewährleisten.

Diese Aufgabe wird gemäß der vorliegenden Erfindung durch ein Verfahren gelöst, das hier als alternierendes Semi-Completing Wälzschälverfahren bezeichnet wird. D.h., die Aufgabe wird gemäß der vorliegenden Erfindung durch ein Verfahren gelöst, das auf dem Prinzip des Semi-Completing Verfahrens beruht. Um eine möglichst gleichmäßige Belastung und somit Abnutzung der Flankenschneiden und gegebenenfalls auch der Kopfschneiden des Wälzschälwerkzeugs zu erzielen, wird ein alternierender Ansatz implementiert.

Kennzeichnend für das Verfahren der Erfindung ist, dass beim Fertigen zum Beispiel einer Verzahnung die beiden Flanken mit unterschiedlichen Einstellungen, jedoch mit demselben Werkzeug kontinuierlich unter Anwendung eines alternierenden Semi-Completing Ansatzes wälzgeschält werden. Es liegt in der Natur des Semi-Completing Ansatzes, dass z.B. alle linken Flankenschneiden des Werkzeugs zweimal zum Einsatz kommen, während die rechten Flankenschneiden nur einmal eingesetzt werden. Daher wird gemäss Erfindung zum Fertigen einer Verzahnung dasselbe Werkzeug so eingesetzt, dass die Flankenschneiden, die zuvor einer stärkeren und/oder längeren Bearbeitungszeit ausgesetzt waren (im genannten Beispiel die linken Flankenschneiden), in nachfolgenden Schritten nun weniger stark oder häufig genutzt werden. Dies wird dadurch erzielt, dass die anderen Flankenschneiden (im genannten Beispiel die rechten Flankenschneiden) beim Fertigen der zweiten Verzahnung stärker oder häufiger eingesetzt werden.

Primär ist die Erfindung für das Vorverzahnen, dass heißt bei der Bearbeitung im Vollen, entwickelt worden.

Man kann gemäss Erfindung zusätzlich zu dem Verschleiß der Flankenschneiden auch den Verschleiß an den Kopfschneiden ausgleichen bzw. gleichmässig verteilen.

Es geht gemäss Erfindung also um ein alternierendes Semi-Completing Wälzschälverfahren. D.h. es geht um ein Verfahren, bei dem Aspekte des Semi-Completings auf ein kontinuierliches Wälzschälverfahren angewendet werden, wobei durch alternierenden Einsatz der Flankenschneiden die Belastung der Schneidzähne des Werkzeugs möglichst gleichmässig verteilt wird.

Das alternierende Semi-Completing Wälzschälverfahren lässt sich im Zusammenhang mit der Herstellung rotationssymmetrischer, periodischer, Strukturen, wie Verzahnungen und dergleichen, einsetzen.

Bei dem alternierenden Semi-Completing Wälzschälverfahren kommt ein Werkzeug zum Einsatz, das hier als Wälzschälwerkzeug bezeichnet wird.

Gemäss Erfindung geht es um ein Verfahren und eine Vorrichtung zum Wälzschälen von mindestens zwei Werkstücken mit rotationssymmetrischen, periodischen Strukturen unter Einsatz nur eines Wälzschälwerkzeugs. Es werden die folgenden Schritte ausgeführt:
- Bereitstellen eines ersten Werkstücks,
   ▪ Anfahren einer ersten Relativposition des Wälzschälwerkzeugs in Bezug zum ersten Werkstück,
   ▪ Ausführen einer ersten Wälzschälbearbeitung (auch erste Bearbeitungsphase genannt) des ersten Werkstücks, wobei während der ersten Wälzschälbearbeitung entweder alle rechten oder alle linken Flanken der periodischen Struktur des ersten Werkstücks fertig bearbeitet und die jeweils anderen Flanken vorbearbeitet werden,
   ▪ Anfahren einer zweiten Relativposition des Wälzschälwerkzeugs in Bezug zum ersten Werkstück,
   ▪ Ausführen einer zweiten Wälzschälbearbeitung (auch zweite Bearbeitungsphase genannt) des ersten Werkstücks, wobei während der zweiten Wälzschälbearbeitung diejenigen Flanken der periodischen Struktur des ersten Werkstücks fertig bearbeitet werden, die zuvor während der ersten Wälzschälbearbeitung nur vorbearbeitet wurden,
- Bereitstellen des zweiten Werkstücks,
   ▪ Anfahren einer dritten Relativposition des Wälzschälwerkzeugs in Bezug zum zweiten Werkstück,
   ▪ Ausführen einer dritten Wälzschälbearbeitung (auch dritte Bearbeitungsphase genannt) des zweiten Werkstücks, wobei während der dritten Wälzschälbearbeitung
      - entweder alle rechten Flanken der periodischen Struktur des zweiten Werkstücks fertig bearbeitet und alle linken Flanken vorbearbeitet werden, falls beim Ausführen der ersten Wälzschälbearbeitung am ersten Werkstück alle linken Flanken der periodischen Struktur fertig bearbeitet wurden,
      - oder alle linken Flanken der periodischen Struktur des zweiten Werkstücks fertig bearbeitet und alle rechten Flanken vorbearbeitet werden, falls beim Ausführen der ersten Wälzschälbearbeitung am ersten Werkstück alle rechten Flanken der periodischen Struktur fertig bearbeitet wurden,
   ▪ Anfahren einer vierten Relativposition des Wälzschälwerkzeugs in Bezug zum zweiten Werkstück,
   ▪ Ausführen einer vierten Wälzschälbearbeitung (auch vierte Bearbeitungsphase genannt) des zweiten Werkstücks, wobei während der vierten Wälzschälbearbeitung diejenigen Flanken der periodischen Struktur des zweiten Werkstücks fertig bearbeitet werden, die zuvor während der dritten Wälzschälbearbeitung nur vorbearbeitet wurden.

Es ist hier anzumerken, dass die dritte und vierte Bearbeitungsphase nicht unbedingt sofort nach der ersten und zweiten Bearbeitungsphase folgen muss. Es ist z.B. auch möglich, dass man mehrere Werkstücke einer ersten und zweiten Bearbeitungsphase unterzieht und dann nachfolgend andere Werkstücke der dritten und vierten Bearbeitungsphase unterzieht. Insgesamt sollte jedoch gewährleistet werden, dass durch das Alternieren bei der Semi-Completing Bearbeitung in etwa eine Gleichverteilung der Belastung der rechten Flankenschneiden und linken Flankenschneiden des Wälzschälwerkzeugs erreicht wird.

Es ist hier anzumerken, dass die rotationssymmetrischen, periodischen Strukturen der Werkstücke nicht unbedingt symmetrische Zähne, bzw. symmetrische Zahnlücken, Nuten oder Rillen aufweisen muss. Im Folgenden sind der Einfachheit halber Werkstücke mit symmetrischen Zähnen gezeigt und beschrieben. Die Erfindung lässt sich aber auch auf asymmetrische Strukturen anwenden.

Es ist hier anzumerken, dass sich mindestens die erste und zweite Relativposition sowie die dritte und vierte Relativposition voneinander unterscheiden. Vorzugsweise entsprechen bei allen Ausführungsformen die erste Relativposition der vierten Relativposition und die zweite Relativposition der dritten Relativposition.

Die Kopfschneide hat am Wälzschälwerkzeug eine Breite, die kleiner ist als die Lückenweite am Zahnfuss der am ersten Werkstück und am zweiten Werkstück zu fertigenden (Zahn-)Lücken.

Zusätzlich kann gemäss Erfindung auch der Verschleiß der Kopfschneiden gleichmässig verteilt werden, indem die Breite der Kopfschneiden in Bezug zur Lückenweite am Werkstück entsprechend gewählt wird. Besonders vorzugsweise hat die Kopfschneide daher eine Breite, die kleiner gleich 2/3 der Lückenweite am Zahnfuss ist.

Kennzeichnend für das Wälzschälen der Erfindung ist bei allen Ausführungsformen, dass die relativen Bewegungsabläufe (Relativbewegungen genannt) zwischen Werkstück und Werkzeug so vorgegeben und ausgeführt werden, dass am Werkstück fortschreitend Material abgetragen wird bis die Zähne oder die anderen periodischen Strukturen ausgebildet sind.

Gemäss Erfindung kann der relativen Vorschubbewegung des Wälzschälwerkzeugs eine radiale Bewegung überlagert sein, um z.B. die Balligkeit der Zähne, gemäss der technischen Lehre der deutschen Patentanmeldung DE3915976 A1, zu beeinflussen.

Das erfindungsgemässe Verfahren kommt vorzugsweise an "unverzahnten" Werkstücken, d.h. im Rahmen der Weichbearbeitung (Vorverzahnen genannt) vor dem Härten, zum Einsatz.

Das erfindungsgemässe Verfahren kann unter Umständen auch zur Hartbearbeitung eingesetzt werden.

Während des Wälzschälens vollführt das sich drehende Werkzeug eine axiale Vorschubbewegung in Bezug auf das sich drehende Werkstück in Richtung der zweiten Rotationsachse, wobei diese axiale Vorschubbewegung gleichsinnig oder gegenläufig zur Schnittrichtung verläuft.

Die Rotationsachse des Werkzeugs ist beim erfindungsgemässen Wälzschälen stets windschief gegenüber der Rotationsachse des Werkstücks angestellt, d.h. der Achskreuzwinkel Σ ist stets ungleich Null.

Zusätzlich kann das Werkzeug während des erfindungsgemässen Wälzschälens in Richtung auf das Werkstück hingeneigt oder vom Werkstück weggeneigt sein, wie zum Beispiel in einer Parallelanmeldung des vorliegenden Anmelders beschrieben, die am 26.5.2011 unter der Anmeldenummer EP11167703.5 beim Europäischen Patentamt eingereicht wurde.

Bei dem erfindungsgemässen Wälzschälen handelt es sich um ein kontinuierliches, spanabhebendes Verfahren.

Die Werkzeuge gemäss Erfindung können für alle Ausführungsformen als sogenannte Vollwerkzeuge ausgelegt sein, d.h. es handelt sich um Werkzeuge, die im Wesentlichen einstückig ausgeführt sind. Bei den Vollwerkzeugen sind die Schneidzähne ein integraler Bestandteil des Werkzeugs.

Besonders bevorzugt sind für alle Ausführungsformen der Erfindung Messerkopfwerkzeuge (hier Stabmesser-Werkzeuge genannt), die einen scheiben-, ring- oder tellerartigen Messerkopfgrundkörper haben, der mit Messereinsätzen, vorzugsweise in Form von Stabmessern, bestückt ist. Auch möglich sind Ausführungsformen der Erfindung, die als Schneidplatten-Werkzeuge ausgelegt sind, die einen scheiben- oder tellerartigen Messerkopfgrundkörper haben, der mit Schneidplatten bestückt ist.

Gemäss Erfindung können die Schäfte der Stabmesser-Werkzeuge im Vergleich zu anderen Wälzschälwerkzeugen schlanker ausgeführt werden. Dadurch wird eine höhere Packungsdichte möglich. Man kann also auf einem scheiben-, ring- oder tellerartigen Messerkopfgrundkörper mehr Stabmesser-Werkzeuge unterbringen als bei anderen Semi-Completing Ansätzen.

Der Verfahren der Erfindung kann nicht nur bei Aussenwerkzeugen sondern auch bei Innenwerkzeugen angewendet werden.

Die Erfindung bietet gegenüber dem konventionellen Semi-Completing-Wälzschälen eine Reihe von Vorteilen, die im Folgenden zusammenfassend aufgeführt sind:
- längere Standzeit der Werkzeuge;
- geringere Werkzeugstückkosten;
- reduziertes Werkzeugversagen;
- bessere Wirtschaftlichkeit.

Das erfindungsgemässe Verfahren kann sowohl im Zusammenhang mit einer Trocken- als auch einer Nassbearbeitung durchgeführt werden.

### ZEICHNUNGEN

Weitere Einzelheiten und Vorteile der Erfindung werden im Folgenden anhand von Ausführungsbeispielen und mit Bezug auf die Zeichnung beschrieben. In allen schematischen Zeichnungen sind, der Einfachheit der Darstellung halber, Werkstück und Wälzschälwerkzeug auf die Situation am Wälzkreis (bzw. am Werkstück auf den Wälzzylinder) reduziert. Die dargestellten Verhältnisse gelten aber auch für die ganze Verzahnung mit einer Zahnhöhe.
- **FIG. 1**: zeigt eine schematische Darstellung eines Stossrads mit zylindrischer Außenkontur im Eingriff mit einem außenverzahnten Werkstück beim Wälzstossen;
- **FIG. 2A**: zeigt eine schematische Darstellung eines geradverzahnten Schälrads mit zylindrischer Außenkontur im Eingriff mit einem außenverzahnten Werkstück beim Wälzschälen;
- **FIG. 2B**: zeigt eine schematische Darstellung eines schrägverzahnten Schälrads mit konischer Außenkontur im Eingriff mit einem außenverzahnten Werkstück beim Wälzschälen;
- **FIG. 3A**: zeigt eine schematische Schnittdarstellung einer ersten Bearbeitungsphase während dem Fertigverzahnen einer linken Flanke und dem gleichzeitigen Vorverzahnen einer rechten Flanke eines ersten Werkstücks, wobei rechte und linke Flankenschneiden und die Kopfschneiden der Schneidzähne des Wälzschälwerkzeugs zum Einsatz kommen;
- **FIG. 3B**: zeigt eine schematische Schnittdarstellung einer zweiten Bearbeitungsphase während dem Fertigverzahnen der rechten Flanke des ersten Werkstücks, wobei nur die rechten Flankenschneiden und die Kopfschneiden der Schneidzähne des Wälzschälwerkzeugs zum Einsatz kommen;
- **FIG. 3C**: zeigt eine schematische Schnittdarstellung einer dritten Bearbeitungsphase während dem Fertigverzahnen einer rechten Flanke und dem gleichzeitigen Vorverzahnen einer linken Flanke eines zweiten Werkstücks, wobei wiederum rechte und linke Flankenschneiden und die Kopfschneiden der Schneidzähne des Wälzschälwerkzeugs zum Einsatz kommen;
- **FIG. 3D**: zeigt eine schematische Schnittdarstellung einer vierten Bearbeitungsphase während dem Fertigverzahnen der linken Flanke des zweiten Werkstücks, wobei nur die linken Flankenschneiden und die Kopfschneiden der Schneidzähne des Wälzschälwerkzeugs zum Einsatz kommen;
- **FIG. 4A**: zeigt eine schematische Schnittdarstellung einer ersten Bearbeitungsphase während dem Fertigverzahnen einer linken Flanke und dem gleichzeitigen Vorverzahnen einer rechten Flanke eines ersten Werkstücks, wobei rechte und linke Flankenschneiden und die kompletten Kopfschneiden der Schneidzähne des Wälzschälwerkzeugs zum Einsatz kommen;
- **FIG. 4B**: zeigt eine schematische Schnittdarstellung einer zweiten Bearbeitungsphase während dem Fertigverzahnen der rechten Flanke des ersten Werkstücks, wobei nur die rechten Flankenschneiden und nur die rechten Abschnitte der Kopfschneiden der Schneidzähne des Wälzschälwerkzeugs zum Einsatz kommen;
- **FIG. 4C**: zeigt eine schematische Schnittdarstellung einer dritten Bearbeitungsphase während dem Fertigverzahnen einer rechten Flanke und dem gleichzeitigen Vorverzahnen einer linken Flanke eines zweiten Werkstücks, wobei wiederum rechte und linke Flankenschneiden und die kompletten Kopfschneiden der Schneidzähne des Wälzschälwerkzeugs zum Einsatz kommen;
- **FIG. 4D**: zeigt eine schematische Schnittdarstellung einer vierten Bearbeitungsphase während dem Fertigverzahnen der linken Flanke des zweiten Werkstücks, wobei nur die linken Flankenschneiden und nur die linken Abschnitte der Kopfschneiden der Schneidzähne des Wälzschälwerkzeugs zum Einsatz kommen;
- **FIG. 5A**: zeigt einen Abschnitt eines Werkstücks in einer Draufsicht, wobei die Position eines Schneidzahns während der ersten Bearbeitungsphase beim Durchlaufen einer Zahnlücke in stark schematisierter Form gezeigt ist;
- **FIG. 5B**: zeigt einen Abschnitt des Werkstücks nach Fig. 5A in einer Draufsicht, wobei die Position des Schneidzahns während der zweiten Bearbeitungsphase beim Durchlaufen der Zahnlücke in stark schematisierter Form gezeigt ist;
- **FIG. 6**: zeigt einen Abschnitt eines Werkstücks beim Wälzschälen, wobei während der zweiten Bearbeitungsphase zu erkennen ist, wie ein Messerstab mit Schneidzahn eines nicht gezeigten Wälzschälwerkzeugs durch eine Zahnlücke geführt wird;
- **FIG. 7**: zeigt eine stark schematisierte Ansicht eines sich konisch verjüngenden Wälzschälwerkzeugs, das im Zusammenhang mit der Erfindung bei einem Neigungswinkel δ von -20 Grad eingesetzt werden kann, zusammen mit einem aussenverzahnten zylindrischen Werkstück;
- **FIG. 8**: zeigt eine stark schematisierte Ansicht eines Wälzschälwerkzeugs in Form eines Schneidrad-Vollwerkzeugs;
- **FIG. 9A**: zeigt eine stark schematisierte Ansicht eines weiteren Wälzschälwerkzeugs in Form eines Schneidrad-Vollwerkzeugs, das für den Einsatz bei einem deutlichen positiven Neigungswinkel δ geeignet ist;
- **FIG. 9B**: zeigt eine stark schematisierte Ansicht des Wälzschälwerkzeugs nach Fig. 9A zusammen mit einem aussenverzahnten zylindrischen Werkstück, wobei ein Neigungswinkel δ von +20 Grad vorgegeben ist;
- **FIG. 10A**: zeigt eine stark schematisierte Ansicht eines weiteren Wälzschälwerkzeugs in Form eines Schneidrad-Vollwerkzeugs, das für den Einsatz bei einem deutlichen negativen Neigungswinkel ö geeignet ist;
- **FIG. 10B**: zeigt eine stark schematisierte Ansicht des Wälzschälwerkzeugs nach Fig. 10A zusammen mit einem aussenverzahnten zylindrischen Werkstück, wobei ein Neigungswinkel δ von -20 Grad vorgegeben ist;
- **FIG. 11**: zeigt eine schematisierte Perspektivansicht eines Teiles eines sogenannten Innenschälrings beim Innenwälzschälen eines geradverzahnten Werkstücks von schräg unten, wobei nur einige Messerstäbe des Innenschälrings gezeigt sind und der ringförmige Grundkörper des Innenschälrings ausgeblendet wurde;
- **FIG. 12**: zeigt eine stark perspektivische Ansicht einer erfindungsgemässen Maschine mit einem Wälzschälwerkzeug beim Verzahnen eines innenverzahnten Werkstücks.

### DETAILLIERTE BESCHREIBUNG

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäß anzuwenden.

Rotationssymmetrische, periodische Strukturen sind zum Beispiel Zahnräder (wie Stirnräder) mit Innen- oder Außenverzahnung. Es kann sich aber zum Beispiel auch um Bremsscheiben, Kupplungs- oder Getriebeelemente und dergleichen handeln. Insbesondere geht es um die Herstellung von Ritzelwellen, Schnecken, Zahnradpumpen, Ringgelenknaben (Ringgelenke finden zum Beispiel im Kraftfahrzeugsektor Verwendung, um die Kraft von einem Differential auf ein Fahrzeugrad zu übertragen), Keilwellenverbindungen, Schiebemuffen, Riemenscheiben und dergleichen. Die periodischen Strukturen werden hier auch als periodisch wiederkehrende Strukturen bezeichnet.

Im Folgenden ist primär von Zahnrädern, Zähnen und Zahnlücken die Rede. Die Erfindung lässt sich aber auch auf andere Bauteile mit anderen periodischen Strukturen übertragen, wie oben erwähnt. Bei diesen anderen Bauteilen geht es in diesem Fall dann nicht um Zahnlücken sondern zum Beispiel um Nuten oder Rillen.

Im Folgenden ist von ersten und zweiten Werkstücken 50.1, 50.2 die Rede. Das zweite Werkstück 50.2 unterscheidet sich typischerweise in der noch nicht bearbeiteten Form und in der fertig bearbeiteten nicht von dem ersten Werkstück 50.1. Einen Unterschied gibt es typischerweise zwischen einem ersten Werkstück 50.1 nach dem ersten Schnitt, der hier als erste Bearbeitungsphase bezeichnet wird, und einem zweiten Werkstück 50.2 nach dem dritten Schnitt, der hier als dritte Bearbeitungsphase bezeichnet wird.

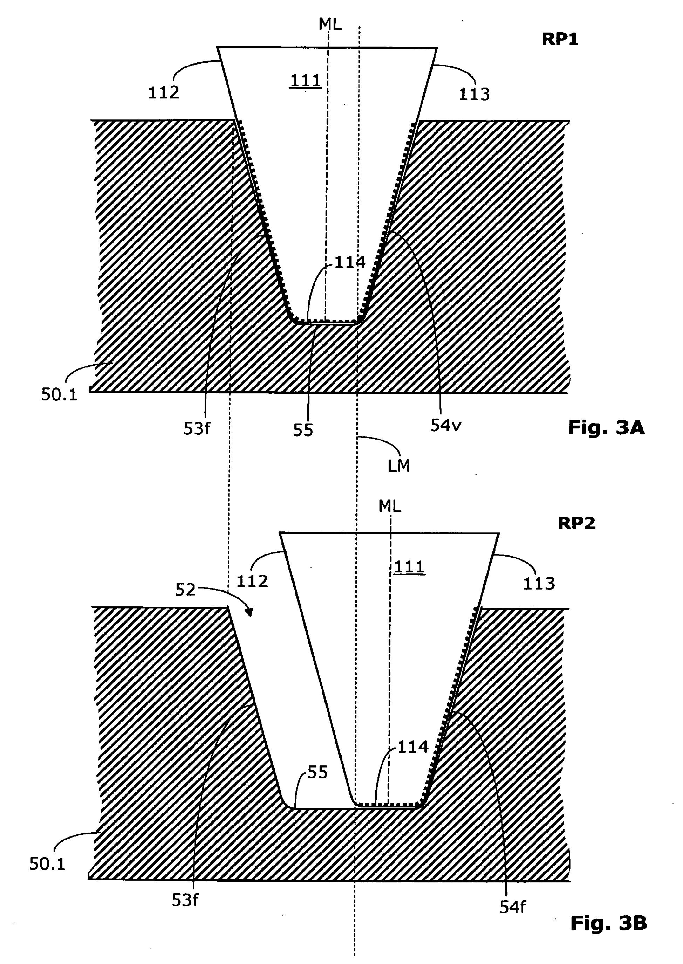

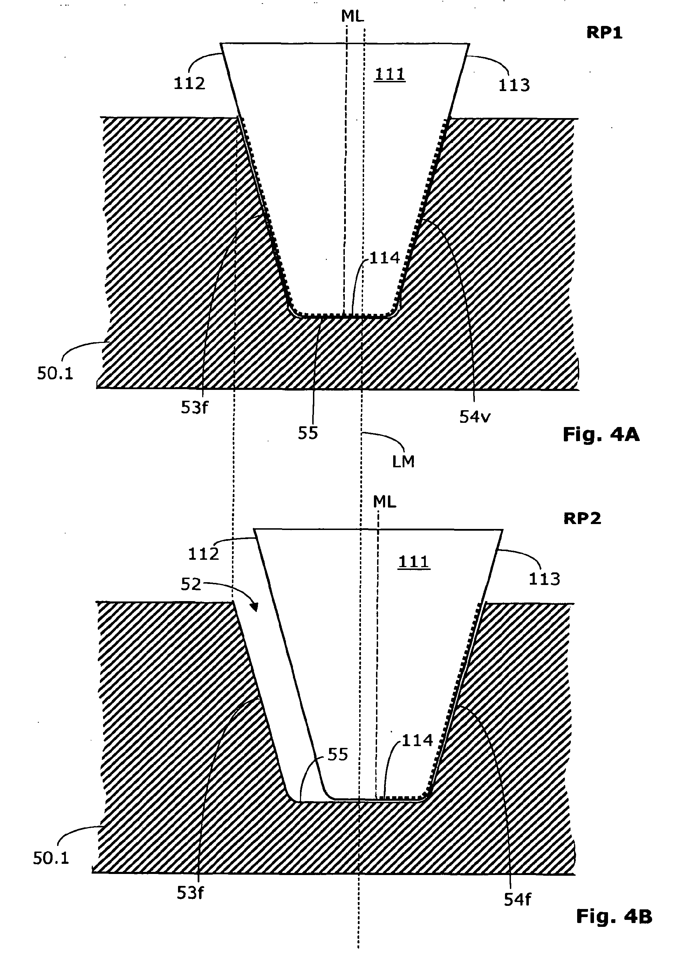

Grundlegende Aspekte des erfindungsgemässen Verfahrens werden im Folgenden unter Bezugnahme auf die stark schematisierten Abbildungen Fig. 3A bis 3D und Fig. 4A bis 4D beschrieben.

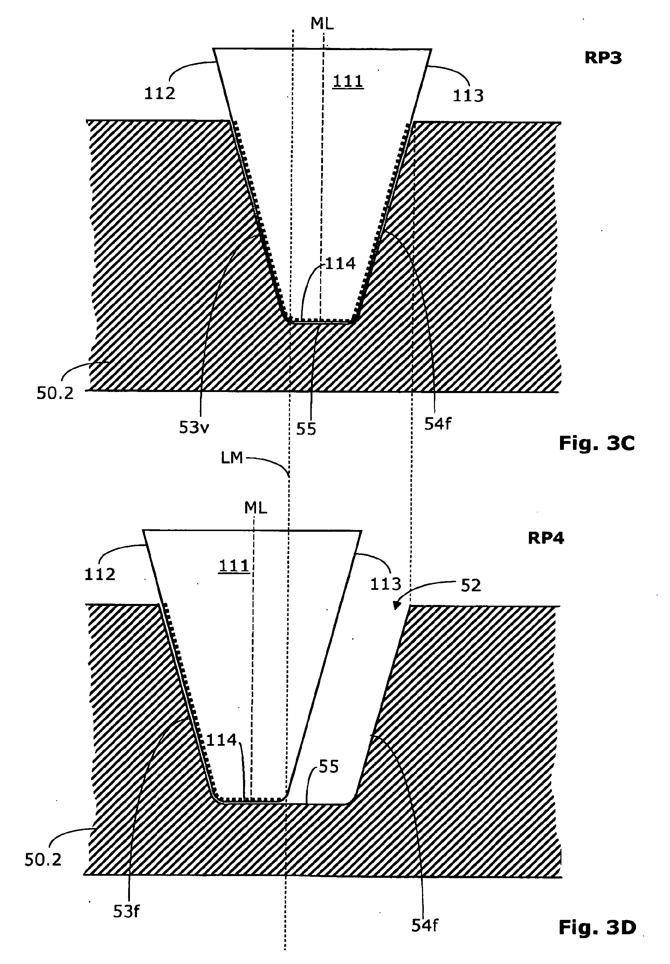

Anhand der Fig. 3A bis 3D wird ein erstes Verfahren beschrieben, bei dem es primär um eine gleichmäßige Belastung aller rechten Flankenschneiden 113 und aller linken Flankenschneiden 112 eines Wälzschälwerkzeugs 100 geht. Der Einsatz der Kopfschneide 114 des Wälzschälwerkzeugs 100 wurde hier keiner Optimierung unterzogen. Es geht in den Fig. 3A und 3B um das Wälzschälen eines ersten Werkstücks 50.1 mit rotationssymmetrischer, periodischer Struktur unter Einsatz eines Wälzschälwerkzeugs 100, und in den Fig. 3C und 3D um das Wälzschälen eines zweiten Werkstücks 50.2 mit rotationssymmetrischer, periodischer Struktur unter Einsatz desselben Wälzschälwerkzeugs 100. Die Figuren sind stark schematisiert und zeigen nur eine Zahnlücke und einen Schneidzahn 111 des Wälzschälwerkzeugs 100. Hilfsweise sind folgende Linien eingezeichnet, um in den Fig. 3A und 3B die Relativlagen des Wälzschälwerkzeugs 100 und Werkstücks 50.1 und in den Fig. 3C und 3D die Relativlagen des Wälzschälwerkzeugs 100 und Werkstücks 50.2 erkennbar zu machen. ML stellt die Mittellinie des Schneidzahns 111 dar. Die gedachte Lückenmitte ist durch die Linie LM angezeigt. Eine dicke, punktierte Linie zeigt in schematisierter Form diejenigen Abschnitte des Schneidzahns 111, die im gezeigten Moment Material am Werkstück 50.1 bzw. 50.2 abtragen.

Die Zähne oder anderen periodischen Strukturen können auch bei allen Ausführungsformen der Erfindung asymmetrisch sein, auch wenn der Einfachheit halber in den Zeichnungen symmetrische Strukturen gezeigt sind.

Das Verfahren umfasst die folgenden Schritte:
- Bereitstellen des ersten Werkstücks 50.1. Dieser Schritt kann zum Beispiel das Einbringen des ersten Werkstücks 50.1 in eine Wälzschälmaschine 200 und das Aufspannen des ersten Werkstücks 50.1 an einer Werkstückspindel 180 umfassen.
   ▪ Es wird nun eine erste Relativposition RP1 des Wälzschälwerkzeugs 100 in Bezug zum ersten Werkstück 50.1 angefahren. Die erste Relativposition RP1 ist in Fig. 3A angedeutet (Die Mittellinie ML sitzt hier links von der gedachten Lückenmitte LM).
   ▪ In der ersten Relativposition RP1 beginnt eine erste Wälzschälbearbeitung (erste Bearbeitungsphase genannt) des ersten Werkstücks 50.1. Während der ersten Bearbeitungsphase werden entweder alle rechten Flanken 54 oder alle linken Flanken 53 der periodischen Struktur des ersten Werkstücks 50.1 fertig bearbeitet und die jeweils anderen Flanken 53, 54 vorbearbeitet. In Fig. 3A ist ein Beispiel gezeigt, bei dem die linken Flanken während der ersten Bearbeitungsphase fertig bearbeitet werden, wie durch das Bezugszeichen 53f (f steht für fertig) angedeutet. Die rechten Flanken werden hingegen nur vorbearbeitet, wie durch das Bezugszeichen 54v (v steht für vorbearbeitet) angedeutet. Während der ersten Bearbeitungsphase kommen alle Flankenschneiden 112, 113 und 114 vollständig zum Einsatz.
   ▪ Nun wird eine zweite Relativposition RP2 des Wälzschälwerkzeugs 100 in Bezug zum ersten Werkstück 50.1 angefahren. Die zweite Relativposition RP2 ist in Fig. 3B angedeutet (Die Mittellinie ML sitzt hier rechts von der gedachten Lückenmitte LM).
   ▪ In der zweiten Relativposition RP2 beginnt eine zweite Wälzschälbearbeitung (zweite Bearbeitungsphase genannt) des ersten Werkstücks 50.1. Während der zweiten Bearbeitungsphase werden diejenigen Flanken 53, 54 der periodischen Struktur des ersten Werkstücks 50.1 fertig bearbeitet, die zuvor während der ersten Bearbeitungsphase nur vorbearbeitet wurden. Im gezeigten Beispiel werden während der zweiten Bearbeitungsphase die rechten Flanken fertig bearbeitet, wie durch das Bezugszeichen 54f (f steht für fertig) angedeutet. Während der zweiten Bearbeitungsphase kommen alle rechten Flankenschneiden 113 und die kompletten Kopfschneiden 114 zum Einsatz. Die linken Flankenschneiden 112 werden hier nicht eingesetzt.
- Anschliessend an die Bearbeitung des ersten Werkstücks 50.1, oder nachdem weitere erste Werkstücke (nach dem gleichen Verfahrensschema) bearbeitet wurden, erfolgt das Bereitstellen des zweiten Werkstücks 50.2. Dieser Schritt kann zum Beispiel das Einbringen des zweiten Werkstücks 50.2 in eine Wälzschälmaschine 200 und das Aufspannen des zweiten Werkstücks 50.2 an einer Werkstückspindel 180 umfassen. Es ist auch möglich eine Wälzschälmaschine 200 mit zwei Werkstückspindeln 180 auszustatten, um den Wechsel von der Bearbeitung des ersten Werkstücks 50.1 zur Bearbeitung des zweiten Werkstücks 50.2 ohne Umspannen zu ermöglichen.
   ▪ Nun wird eine dritte Relativposition RP3 des Wälzschälwerkzeugs 100 in Bezug zum zweiten Werkstück 50.2 angefahren. Die Mittellinie ML sitzt hier rechts von der gedachten Lückenmitte LM, wie in der zweiten Relativposition RP2.
   ▪ In der dritten Relativposition RP3 (die z.B. der zweiten Relativposition RP2 entsprechen kann) beginnt eine dritte Wälzschälbearbeitung (dritte Bearbeitungsphase genannt) des zweiten Werkstücks 50.2. Während der dritten Bearbeitungsphase werden
      - entweder alle rechten Flanken 54 der periodischen Struktur des zweiten Werkstücks 50.2 fertig bearbeitet und alle linken Flanken 53 vorbearbeitet (wie in Fig. 3C gezeigt), falls beim Ausführen der ersten Wälzschälbearbeitung am ersten Werkstück 50.1 alle linken Flanken 53 der periodischen Struktur fertig bearbeitet wurden (wie es in Fig. 3A der Fall ist),
      - oder es werden alle linken Flanken 53 der periodischen Struktur des zweiten Werkstücks 50.2 fertig bearbeitet und alle rechten Flanken 54 vorbearbeitet, falls beim Ausführen der ersten Wälzschälbearbeitung am ersten Werkstück 50.1 alle rechten Flanken 54 der periodischen Struktur fertig bearbeitet wurden.
      Bei dem in den Figuren 3A bis 3D gezeigten Beispiel wurden am ersten Werkstück 50.1 während der ersten Bearbeitungsphase alle linken Flanken der periodischen Struktur fertig bearbeitet, wie durch das Bezugszeichen 53f (f steht für fertig) in Fig. 3A angedeutet. Daher werden während der dritten Bearbeitungsphase (in Fig. 3C gezeigt) alle rechten Flanken der periodischen Struktur des zweiten Werkstücks 50.2 fertig bearbeitet, wie in Fig. 3C durch das Bezugszeichen 54f (f steht für fertig) angedeutet. Die linken Flanken werden nur vorbearbeitet, wie in Fig. 3C durch das Bezugszeichen 53v (v steht für vorbearbeitet)angedeutet. Während der dritten Bearbeitungsphase kommen erneut alle Flankenschneiden 112, 113 und 114 vollständig zum Einsatz.
   ▪ Nun wird eine vierte Relativposition RP4 des Wälzschälwerkzeugs 100 in Bezug zum zweiten Werkstück 50.2 angefahren. Die vierte Relativposition RP4 ist im gezeigten Beispiel mit der ersten Bearbeitungsposition RP1 identisch, was anhand eines Vergleichs der Figuren A und 3D ersichtlich wird. Die Mittellinie ML sitzt hier links von der gedachten Lückenmitte LM, wie in der ersten Relativposition RP1.
   ▪ In der vierten Relativposition RP4 beginnt eine vierte Wälzschälbearbeitung (vierte Bearbeitungsphase genannt) des zweiten Werkstücks 50.2. Während der vierten Bearbeitungsphase werden diejenigen Flanken 53, 54 der periodischen Struktur des zweiten Werkstücks 50.2 fertig bearbeitet, die zuvor während der dritten Bearbeitungsphase nur vorbearbeitet wurden. Im gezeigten Beispiel werden die linken Flanken fertig bearbeitet, wie durch das Bezugszeichen 53f (f steht für fertig) in Fig. 3D angedeutet. Während der vierten Bearbeitungsphase kommen alle linken Flankenschneiden 112 und die kompletten Kopfschneiden 114 zum Einsatz. Die rechten Flankenschneiden 113 werden hier nicht eingesetzt.

Summa summarum werden beim Fertigen eines ersten Werkstücks 50.1 und eines zweiten Werkstücks 50.2 nach Fig. 3A bis 3D pro von einem Messer geschnittener Zahnlücke 52 die linken Flankenschneiden 112 drei mal, die rechten Flankenschneiden 113 drei mal und die Kopfschneide vier mal eingesetzt. Damit sind die Flankenschneiden 112, 113 gleichmässig belastet.

In den Figuren 3A bis 3D ist weiterhin zu erkennen, dass an dem Schneidzahn 111 eine rechte Flankenschneide 113, eine linke Flankenschneide 112 und eine Kopfschneide 114 vorgesehen sind. Im gezeigten Beispiel hat die Kopfschneide 114 eine Breite (in der Zeichenebene), die in etwa der Hälfte der Fussweite des Zahnfusses 55 der zu fertigenden Zahnlücke 52 entspricht. Diese Dimensionierung führt dazu, dass die Kopfschneide 114 beim Bearbeiten des ersten Werkstücks 50.1 zwei mal zum Einsatz kommt und zwar während der ersten Bearbeitungsphase (Fig. 3A) und der zweiten Bearbeitungsphase (Fig. 3B). Beim zweiten Werkstück 50.2 kommt die Kopfschneide 114 entsprechend auch zweimal zum Einsatz. Wenn man hingegen die Breite der Kopfschneide 114 grösser als die Hälfte der Fussweite der zu fertigenden Zahnlücke 52 macht, dann kommt nur ein Teil der Kopfschneide 114 mehrmals zum Einsatz, wie im Folgenden anhand der Fig. 4A bis 4D beschrieben wird.

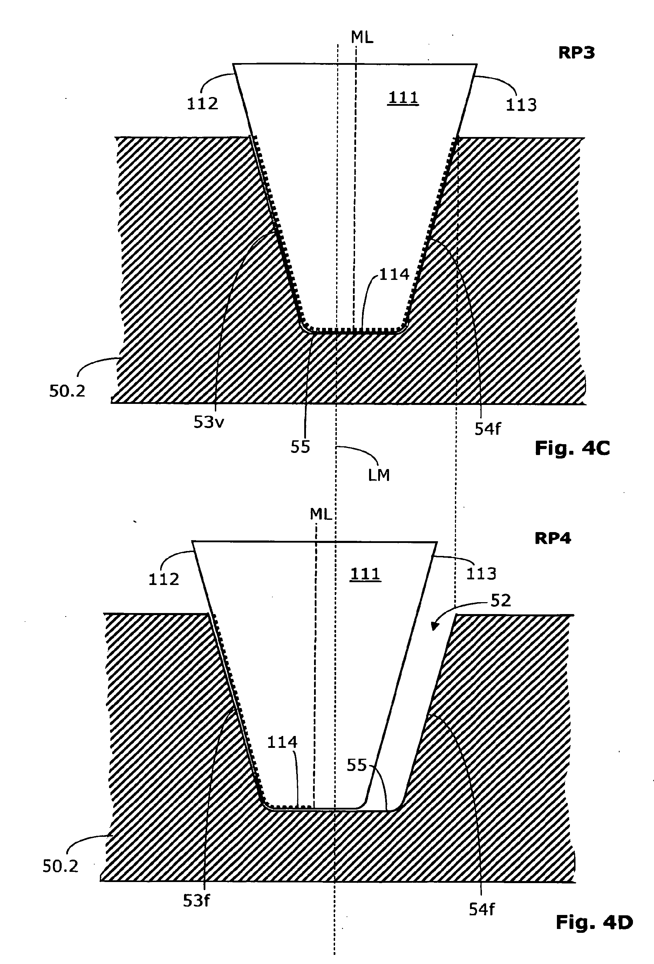

Anhand der Fig. 4A bis 4D wird ein zweites Verfahren beschrieben, bei dem es nicht nur um eine gleichmäßige Belastung aller rechten Flankenschneiden 113 und aller linken Flankenschneiden 112 eines Wälzschälwerkzeugs 100 geht. Der Einsatz der Kopfschneide 114 des Wälzschälwerkzeugs 100 wurde hier einer Optimierung unterzogen. Es geht auch in den Fig. 4A und 4B um das Wälzschälen eines ersten Werkstücks 50.1 mit rotationssymmetrischer, periodischer Struktur unter Einsatz eines Wälzschälwerkzeugs 100, und in den Fig. 4C und 4D um das Wälzschälen eines zweiten Werkstücks 50.2 mit rotationssymmetrischer, periodischer Struktur unter Einsatz desselben Wälzschälwerkzeugs 100.

Da die Fig. 4A bis 4D im Wesentlichen den Fig. 3A bis 3D entsprechen, wird auf die Beschreibung der Fig. 3A bis 3D verwiesen. Im Folgenden werden nur die wesentlichen Unterschiede behandelt. Anhand von Fig. 4B und 4D ist zu erkennen, dass die Kopfschneide 114 eine Breite hat, die in etwa 2/3 der Lückenweite am Zahnfuss 55 entspricht.

In der ersten Bearbeitungsphase, die in Fig. 4A gezeigt ist, kommen alle Flankenschneiden 112, 113 und die komplette Kopfschneide 114 zum Einsatz, wie man auch hier anhand einer dicken, punktierten Linie erkennen kann. In Fig. 4A werden die linke Flanke 53f fertig bearbeitet und die rechte Flanke 54v vorbearbeitet. Ausserdem wurde der Zahnfuss über die komplette Breite der Kopfschneide 114 bearbeitet.

In Fig. 4B wird während der zweiten Bearbeitungsphase die rechte Flanke 54f fertig bearbeitet. Ausserdem wird ca. das rechte Drittel der Lückenweite am Zahnfuss 55 fertig bearbeitet. In der zweiten Bearbeitungsphase, die in Fig. 4B gezeigt ist, kommen nur die rechte Flankenschneiden 113 und höchstens die rechte Hälfte der Kopfschneide 114 zum Einsatz, wie man auch hier anhand einer dicken, punktierten Linie erkennen kann.

In der dritten Bearbeitungsphase, die in Fig. 4C gezeigt ist, kommen wiederum alle Flankenschneiden 112, 113 und die komplette Kopfschneide 114 zum Einsatz, wie man anhand einer dicken, punktierten Linie erkennen kann. In Fig. 4C werden die rechte Flanke 54f fertig bearbeitet und die linke Flanke 53v vorbearbeitet. Ausserdem wurde der Zahnfuss über die komplette Breite der Kopfschneide 114 bearbeitet.

In Fig. 4D wird während der vierten Bearbeitungsphase die linke Flanke 53f fertig bearbeitet. Ausserdem wird ca. das linke Drittel der Lückenweite am Zahnfuss 55 fertig bearbeitet. In der vierten Bearbeitungsphase, die in Fig. 4D gezeigt ist, kommen nur die linke Flankenschneide 112 und höchstens die linke Hälfte der Kopfschneide 114 zum Einsatz, wie man auch hier anhand einer dicken, punktierten Linie erkennen kann.

Summa summarum werden beim Fertigen eines ersten Werkstücks 50.1 und eines zweiten Werkstücks 50.2 nach Fig. 4A bis 4D pro von diesem Messer geschnittener Zahnlücke 52 die linken Flankenschneiden 112 drei mal, die rechten Flankenschneiden 113 drei mal und die Kopfschneide 114 drei mal eingesetzt. Damit sind die Flankenschneiden 112, 113 und die Kopfschneide 114 gleichmässig belastet.

Der Schneidzahn 111 kann Teil eines als Vollwerkzeug, Stabmesser-Werkzeug oder Schneidplatten-Werkzeug ausgebildeten Wälzschälwerkzeugs 100 sein.

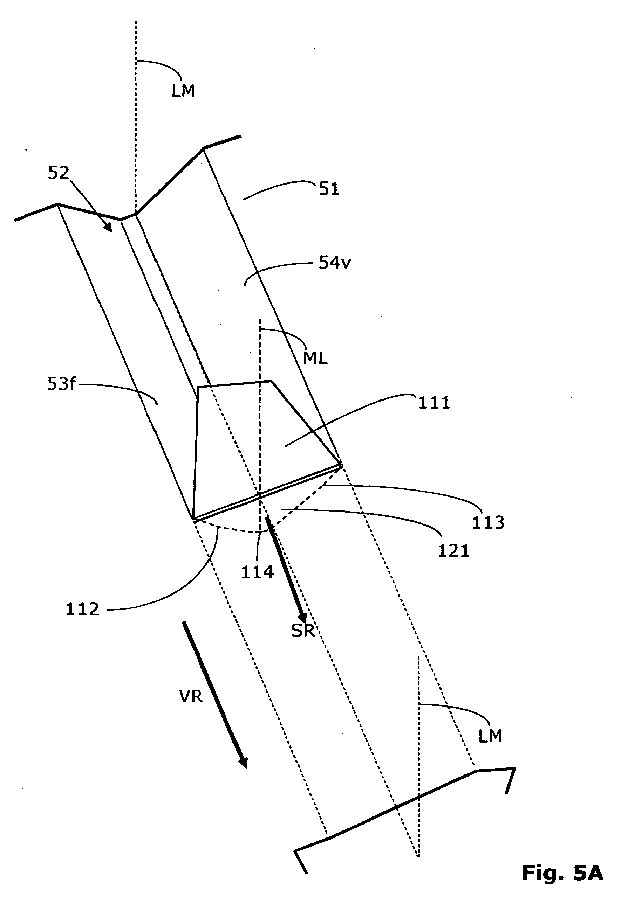

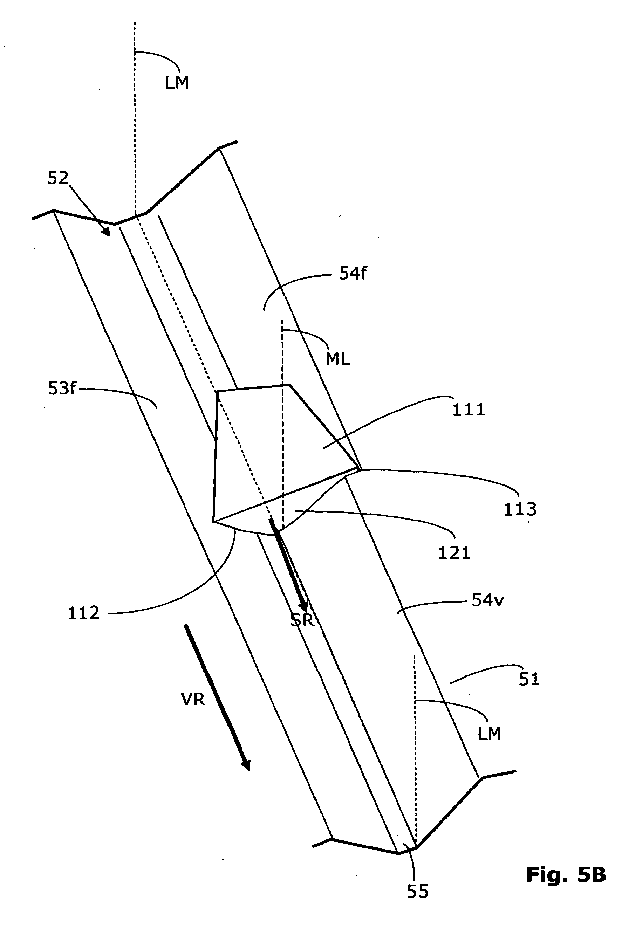

Die Figuren 5A und 5B zeigen Darstellungen, die in etwa der Situation in den Figuren 3A und 3B entsprechen.

In Fig. 5A ist ein Abschnitt eines Werkstücks 50.1 in einer Draufsicht zu erkennen, wobei die Position eines Schneidzahns 111 beim Durchlaufen einer Zahnlücke 52 in stark schematisierter Form gezeigt ist. Anhand von Fig. 5A und 5B kann man die Vorschubrichtung VR, die Schnittrichtung SR, die Lage des Schneidzahns 111 und die schematische Form einer Spanfläche 121 erkennen. Die Vorschubrichtung VR verläuft in Lückenrichtung und setzt sich zusammen aus dem Axialvorschub und einem an diesen gekoppelten Differentialvorschub des Werkstücks 50.1. Die Schnittrichtung SR bildet hier mit der Vorschubrichtung VR einen spitzen Winkel. Fig. 5A zeigt eine schematisierte Momentaufnahme z.B. während der ersten Bearbeitungsphase. Die Flankenschneiden 112, 113 und die Kopfschneide 114 sind in Fig. 5A strichliert dargestellt, da diese Elemente des Schneidzahns 111 durch das Material des Werkstücks 50.1 verdeckt sind. Im gezeigten Moment kommen sowohl die Flankenschneiden 112, 113 als auch die Kopfschneide 114 zum Einsatz.

Fig. 5B zeigt eine schematisierte Momentaufnahme z.B. während der zweiten Bearbeitungsphase. Die Flankenschneide 112 ist sichtbar. Von der Flankenschneide 113 ist nur ein kleiner Abschnitt erkennbar. Die Kopfschneide 114 ist in Fig. 5B durch das Material des Werkstücks 50.1 verdeckt. Zur besseren Veranschaulichung sind in den Figuren 5A und 5B auch die Hilfslinien LM und ML eingezeichnet, deren Bedeutung im Zusammenhang mit den Figuren 3A bis 3D erläutert wurde.

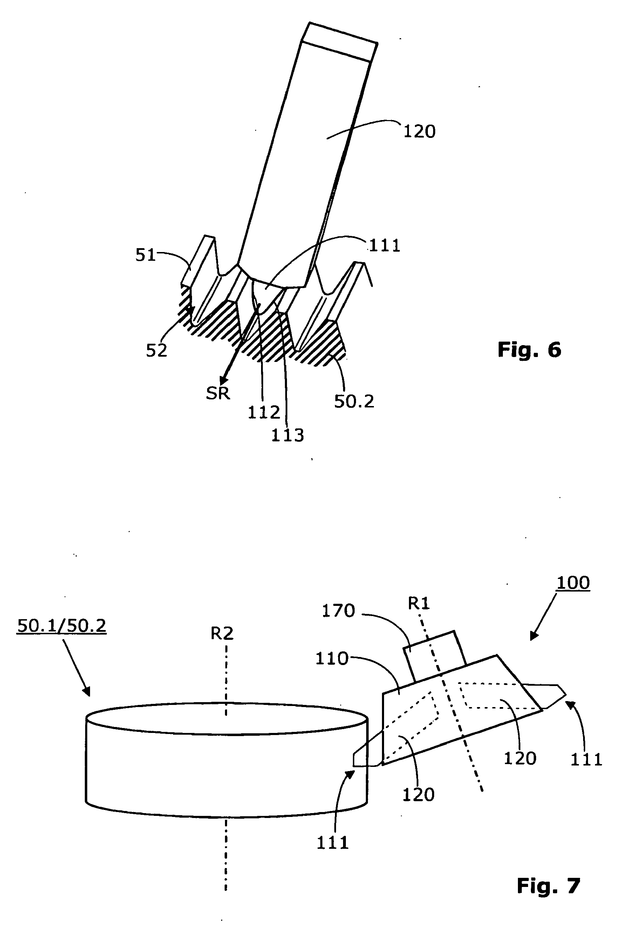

Fig. 6 zeigt einen Abschnitt eines zweiten Werkstücks 50.2 beim erfindungsgemässen Wälzschälen, wobei zu erkennen ist, wie ein Messerstab 120 mit Schneidzahn 111 durch eine Zahnlücke 52 geführt wird. Das Wälzschälwerkzeug 100 (Stabmesser-Werkzeug genannt), das in Fig. 6 nicht gezeigt ist, umfasst einen Grundkörper zur Aufnahme mehrerer Messerstäbe 120. Hier ist jedoch nur ein Messerstab 120 des Wälzschälwerkzeugs 100 gezeigt.

Bei allen Ausführungsformen weist jeder Schneidzahn 111 eine Spanfläche 121 auf, wobei alle Spanflächen 121 vorzugsweise bezüglich der Rotationsachse R₁ des Werkzeugs 100 rotationssymmetrisch an einer stirnseitigen Ebene oder an einer stirnseitigen Kegelfläche (gegebenenfalls einzeln gegenüber der Stirnebene oder Kegelfläche um einen Treppenwinkel verkippt) angeordnet sind.

D.h. die Spanflächen 121 sind vorzugsweise an einer stirnseitigen Kegelfläche, welche zu einer Stirnebene entarten kann, rotationssymmetrisch bezüglich der Rotationsachse R1 des Werkzeugs 100 angeordnet.

Die Spanflächen 121 können als ebene Flächen oder als leicht gekrümmte Flächen an den Schneidköpfen (Schneidzähnen 111) ausgebildet sein. Die Spanflächen 121 können auch leicht bezüglich einer Spanflächenbezugsebene gewölbt sein.

Gemäss Erfindung stehen die beiden Rotationsachsen R1 und R2 stets windschief zueinander. Der Achskreuzwinkel Σ ist also hier stets ungleich Null.

Vorzugsweise können die Werkzeuge 100 während des Wälzschälens in Richtung auf das Werkstück 50.1, 50.2 hingeneigt oder vom Werkstück 50.1, 50.2 weggeneigt sein. Das entsprechende Neigen des Werkzeugs 100 ist optional. Es dient generell der Kollisionsvermeidung. Der entsprechende Neigungswinkel wird mit δ bezeichnet. Details zum Neigen sind zum Beispiel in der Parallelanmeldung des vorliegenden Anmelders beschrieben, die am 26.5.2011 unter der Anmeldenummer EP11167703.5 beim Europäischen Patentamt eingereicht wurde.

Vorzugsweise liegt der Neigungswinkel δ im Bereich von -30 Grad bis +30 Grad.

In Fig. 7 ist eine stark schematisierte Ansicht eines sich konisch verjüngenden Wälzschälwerkzeugs 100 gezeigt, das im Zusammenhang der Erfindung bei einem Neigungswinkel δ von -20 Grad eingesetzt werden kann. Wie in der schematischen Darstellung in Fig. 7 gezeigt, handelt es sich bei dem Wälzschälwerkzeug 100 um ein sogenanntes Messerkopfwerkzeug, das einen Messerkopfgrundkörper 110 (hier mit einer kegelstumpfförmigen (konischen) Form) hat, der mit Messereinsätzen, vorzugsweise in Form von Stabmessern 120, bestückt ist. Das Wälzschälwerkzeug 100 wird mittels einer Werkzeugspindel 170, die hier stark schematisiert gezeigt ist, bewegungstechnisch mit einer Maschine 200 verbunden. Das Wälzschälwerkzeug 100 hat eine Kollisionskontur (im Sinne einer dreidimensionalen Umfangsform von Messerkopfgrundkörper 110 samt Messerstäben 120), die so gewählt wurde, dass es während des Wälzschälens trotz des Hinneigens mit δ = -20 Grad zu keiner Kollision des Wälzschälwerkzeugs 100 mit dem Werkstück 50.1 oder 50.2 kommt.

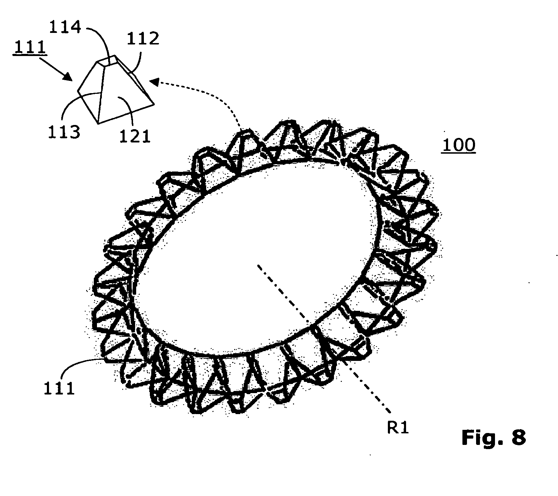

Das Wälzschälwerkzeug 100 kann aber eine andere Form haben, wie z.B. in Fig. 8 andeutungsweise gezeigt. In Fig. 8 ist ein Wälzschälwerkzeug 100 gezeigt, das die Form eines Schneidrads hat. Es handelt sich hier um ein Vollwerkzeug, bei dem die Schneidzähne 111 Teil des Wälzschälwerkzeugs 100 sind. Das Wälzschälwerkzeug 100 weist hier 24 Schneidzähne 111 auf, von denen in Fig. 8 einer mit einem Bezugszeichen versehen ist. Der Grundkörper des Wälzschälwerkzeugs 100 hat hier die Form einer Kegelstumpfscheibe oder eines kegelstumpfförmigen Tellers. Ein einzelner Schneidzahn 111 ist neben dem Wälzschälwerkzeug 100 in vergrößerter Form gezeigt. An diesem Schneidzahn 111 sind die Flankenschneiden 112, 113, die Kopfschneide 114 und die Spanfläche 121 bezeichnet.

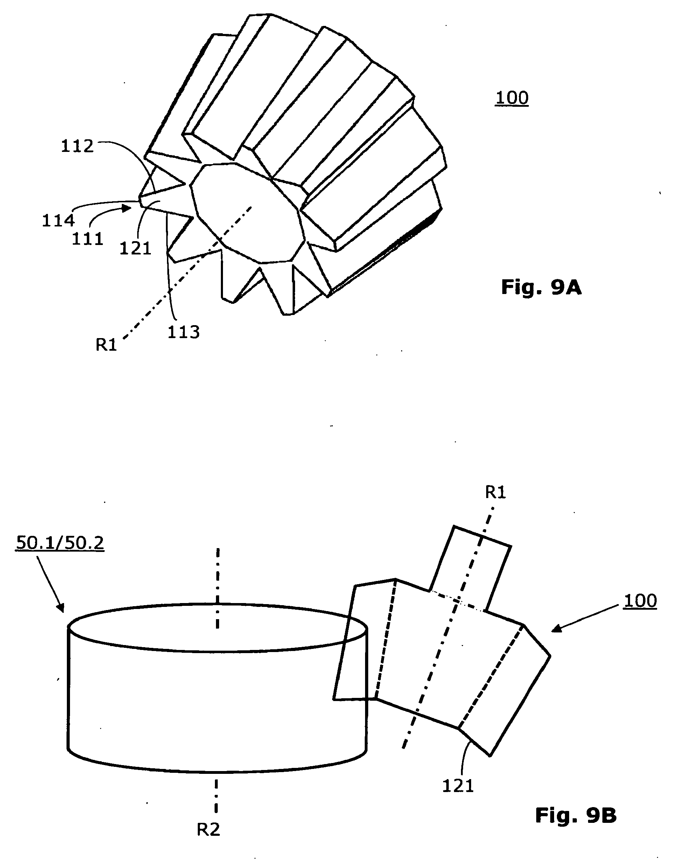

Fig. 9A zeigt ein weiteres Wälzschälwerkzeug 100, das im Zusammenhang mit der Erfindung eingesetzt werden kann. Die Spanflächen 121 der Schneidzähne 111 sind hier auf einer Kegelfläche (gegebenenfalls verkippt) angeordnet. Fig. 9B zeigt das Wälzschälwerkzeug 100 nach Fig. 9A im Eingriff mit einem zylindrischen Werkstück 50.1 oder 50.2. Das Wälzschälwerkzeug 100 ist hier mit einem deutlichen Neigungswinkel δ vom Werkstück 50.1, 50.2 weggeneigt. Der Neigungswinkel δ beträgt hier ca. 20 Grad.

Das in den Figuren 9A und 9B gezeigte Wälzschälwerkzeug 100 hat die Form eines geradverzahnten Kegelrades, wobei die Zähne dieses Kegelrades die Schneidzähne 111 darstellen. Die Spanflächen 121 befinden sich an der Stirnseite mit dem kleineren Durchmesser. Genauer gesagt, sind die Spanflächen 121 am Ergänzungskegel, d.h. auf einer Kegelfläche (gegebenenfalls bezüglich dieser verkippt) angeordnet. Der Schrägungswinkel ß₁ des dargestellten Wälzschälwerkzeugs 100 beträgt 0 Grad. Für Schrägungswinkel ß₁ ungleich 0 Grad hat ein entsprechendes Wälzschälwerkzeug 100 die Grundform eines schrägverzahnten Kegelrades.

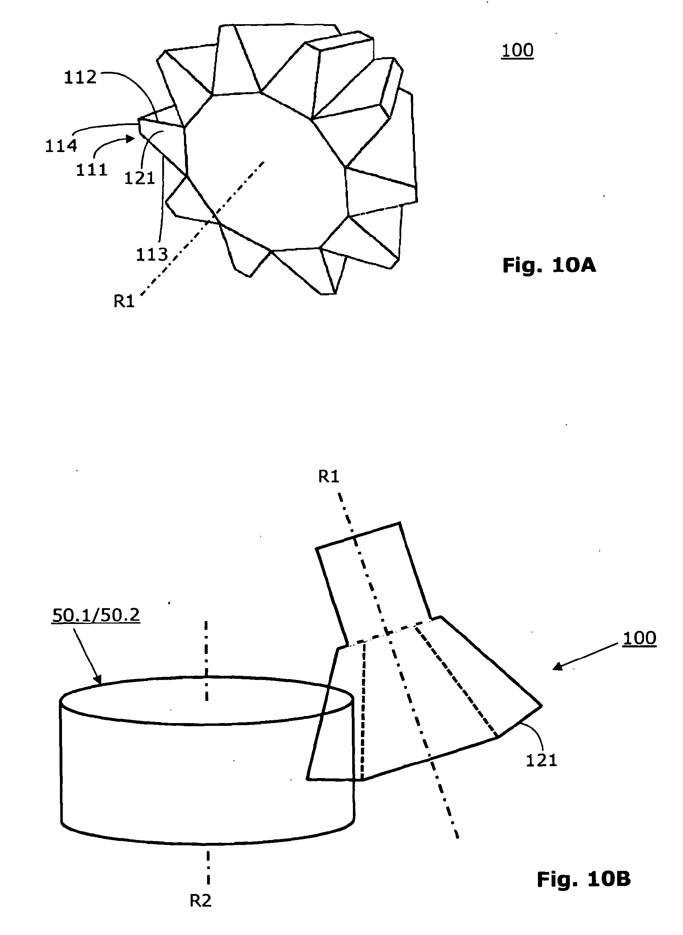

Fig. 10A zeigt ein weiteres Wälzschälwerkzeug 100, das im Zusammenhang mit der Erfindung eingesetzt werden kann. Die Spanflächen 121 der Schneidzähne 111 sind hier auf einer Kegelfläche (gegebenenfalls verkippt) angeordnet. Fig. 10B zeigt das Wälzschälwerkzeug 100 nach Fig. 10A im Eingriff mit einem zylindrischen Werkstück 50.1 oder 50.2. Das Wälzschälwerkzeug 100 ist hier mit einem deutlichen Neigungswinkel δ zum Werkstück 50.1, 50.2 hingeneigt. Der Neigungswinkel δ beträgt hier ca. -18 Grad.

Das in den Figuren 10A und 10B gezeigte Wälzschälwerkzeug 100 hat die Form eines geradverzahnten Kegelrades, wobei die Zähne dieses Kegelrades die Schneidzähne 111 darstellen. Die Spanflächen 121 befinden sich an der Stirnseite mit dem größeren Durchmesser. Genauer gesagt, sind die Spanflächen 121 am Ergänzungskegel, d.h. auf einer Kegelfläche (gegebenenfalls bezüglich dieser verkippt) angeordnet. Der Schrägungswinkel ß₁ des dargestellten Werkzeugs 100 beträgt Null Grad. Für Schrägungswinkel zu ungleich Null Grad hat ein entsprechendes Wälzschälwerkzeug 100 die Grundform eines schrägverzahnten Kegelrades.

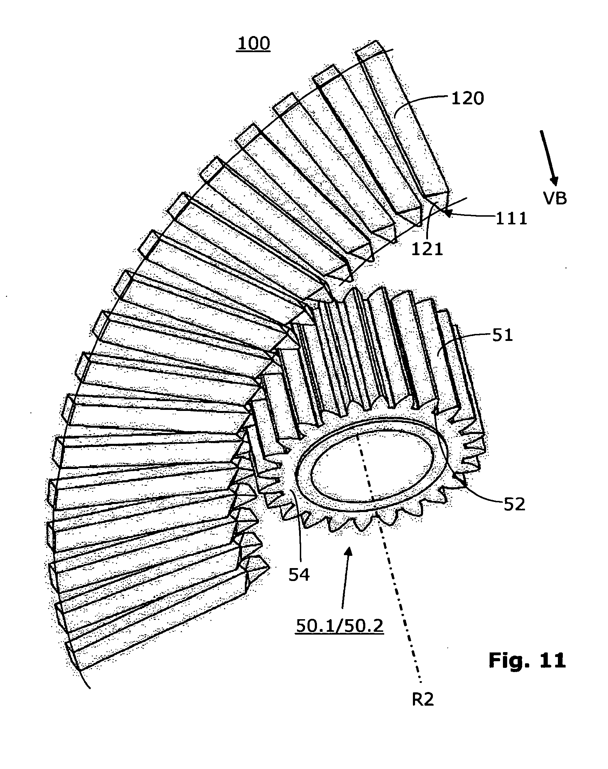

Fig. 11 zeigt eine schematisierte Perspektivansicht eines Teiles eines sogenannten Innenschälrings 100 beim Innenwälzschälen eines geradverzahnten Werkstücks 50.1 oder 50.2, wobei nur einige Messerstäbe 120 des Innenschälrings 100 gezeigt sind. An dem geradverzahnten Werkstück 50.1, 50.2 sind die Zähne 51, respektive die Zahnlücken 52 zwischen den Zähnen 51 bereits fast fertig gestellt. Der ringförmige Grundkörper des Innenschälrings 100 wurde ausgeblendet. Anhand von Fig. 11 ist gut zu erkennen, wie die schlanken Schäfte (hier mit rechteckigem Querschnitt gezeigt) der Messerstäbe 120 problemlos und kollisionsfrei in einem ringförmigen Grundkörper angeordnet werden können. In Fig. 11 sind an einem der Messerstäbe 120 der Schneidzahn 111 und die Spanfläche 121 bezeichnet. Die Spanflächen 121 der Schneidzähne 111 sind im gezeigten Beispiel leicht gegenüber der Stirnebene gekippt.

Details eines entsprechenden Verfahrens zum Innenwälzschälen sind zum Beispiel in einer Parallelanmeldung des vorliegenden Anmelders beschrieben, die am 14.7.2011 unter der Anmeldenummer EP11173901.7 beim Europäischen Patentamt eingereicht wurde.

Eine Maschine 200, die zum erfindungsgemässen alternierenden Semi-Completing Wälzschälen ausgelegt ist, weist eine CNC-Steuerung 201 auf, die eine Koppelung der Achsen R1 und R2, respektive eine Koordination der Achsbewegungen ermöglicht. Die CNC-Steuerung 201 kann Teil der Maschine 200 sein, oder sie kann extern ausgeführt und zur kommunikationstechnischen Verbindung 202 mit der Maschine 200 ausgelegt sein. Die entsprechende Maschine 200 umfasst einen sogenannten "elektronischen Getriebezug", respektive eine "elektronische oder steuerungstechnische Achskopplung" um eine Vorschubbewegung VB des Wälzschälwerkzeugs 100 in Bezug zu dem Werkstück 50.1 oder 50.2 auszuführen (bei dem Werkstück 50.1 oder 50.2 handelt es sich im gezeigten Beispiel um ein innenverzahntes Werkstück). Das gekoppelte Bewegen des Wälzschälwerkzeugs 100 und des Werkstücks 50.1, 50.2 wird so ausgeführt, dass sich während der verschiedenen Bearbeitungsphasen entsprechende Relativbewegungen zwischen dem Wälzschälwerkzeug 100 und dem Werkstück 50.1, 50.2 ergeben, die den Relativbewegungen eines Schraubradgetriebes entsprechen. Der elektronische Getriebezug, respektive die elektronische oder steuerungstechnische Achskopplung sorgen für eine Drehzahlsynchronisierung von mindestens zwei Achsen der Maschine 200. Hierbei sind mindestens die Rotationsachse R1 der Werkzeugspindel 170 mit der Rotationsachse R2 der Werkstückspindel 180 gekoppelt. Ausserdem ist vorzugsweise bei allen Ausführungsformen die Rotationsachse R1 der Werkzeugspindel 170 mit der Axialvorschubbewegung VB in Richtung R2 gekoppelt. Diese Axialvorschubbewegung VB ergibt sich aus einer Überlagerung von Bewegungen 204 (vertikal) und 208 (horizontal). Zusätzlich kann die Werkstückspindel 180 mittels eines (Dreh-)Schlittens 205 parallel zu einer Schwenkachse SA linear verschoben werden, wie durch einen Doppelpfeil 206 dargestellt. Ausserdem kann der (Dreh-)Schlitten 205 samt Werkstückspindel 180 und Werkstück 50.1, 50.2 um die Schwenkachse SA gedreht werden, wie durch einen Doppelpfeil 207 dargestellt. Durch das Drehen um die Schwenkachse SA kann der Achskreuzwinkel Σ eingestellt werden. Der Achsabstand der Rotationsachsen R1 und R2 kann durch die lineare Verschiebungsbewegung 206 eingestellt werden.

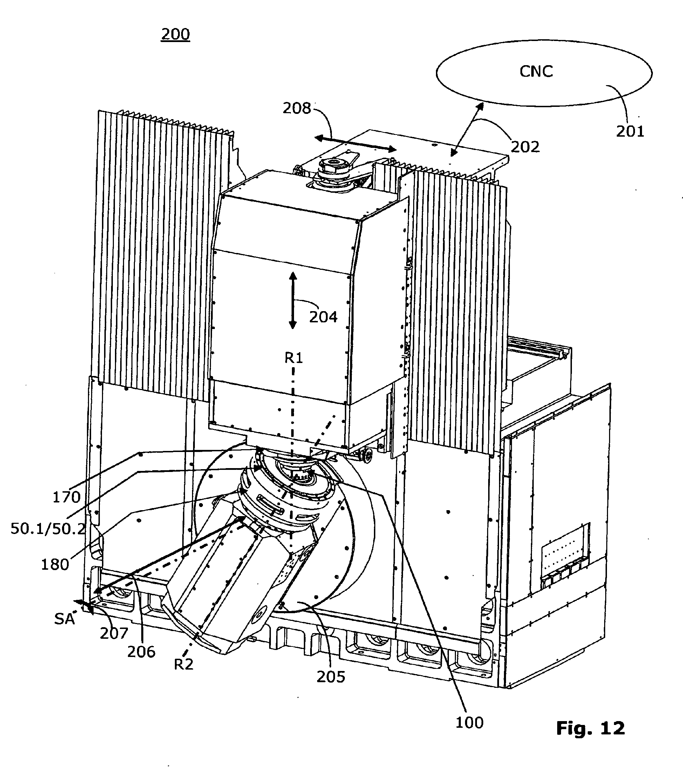

Vorzugsweise kommt eine Maschine 200 zum Einsatz, die auf einer Vertikalanordnung basiert, wie in Fig. 12 gezeigt. Bei einer solchen Vertikalanordnung sitzt entweder das Wälzschälwerkzeug 100 samt Werkzeugspindel 170 oberhalb des Werkstücks 50.1, 50.2 samt Werkstückspindel 180, oder umgekehrt. Die Späne, die beim Wälzschälen entstehen, fallen aufgrund der Schwerkraftwirkung nach unten und können z.B. über ein Spanbett, das nicht gezeigt ist, entfernt werden.

Weiterhin sorgt eine Maschine 200, die zum erfindungsgemässen Wälzschälen ausgelegt ist, für die richtigen komplexen geometrischen und kinematischen Maschineneinstellungen und Achsbewegungen der genannten Achsen. Vorzugsweise hat die Maschine 200 bei allen Ausführungsformen sechs Achsen. Folgende Achsbewegungen sind bevorzugt:
- Drehen des Wälzschälwerkzeugs 100 um die erste Rotationsachse R1;
- Gekoppeltes Drehen des Werkstücks 50.1, 50.2 um die zweite Rotationsachse R2;
- Drehbewegung um die Schwenkachse SA;
- Lineare Vertikalbewegung parallel zu 204;
- Lineare Horizontalbewegung parallel zu 206;
- Lineare Horizontalbewegung parallel zu 208.

Das beschriebene Wälzschälverfahren kann bei allen Ausführungsformen trocken oder nass angewendet werden, wobei die Verwendung des Wälzschälens im Trockenen bevorzugt ist.

Das Einsatzspektrum des beschriebenen Wälzschälverfahrens ist groß und erstreckt sich auf die Anwendung bei der Herstellung verschiedenster rotationssymmetrischer periodischer Strukturen.

### Bezugszeichenliste:

| | |
|---|---|
| Stossrad | 1 |
| Werkstück | 2 |
| Zahnkopf | 4 |
| Zahnbrust | 5 |
| Wälzschälwerkzeug | 10 |
| | |
| (wälzgeschältes) Werkstück | 20 |
| | |
| Erstes (wälzgeschältes) Werkstück | 50.1 |
| zweites (wälzgeschältes) Werkstück | 50.2 |
| Zahn | 51 |
| Zahnlücke | 52 |
| Linke Flanke | 53 |
| Linke Flanke vorbearbeitet | 53v |
| Linke Flanke fertig bearbeitet | 53f |
| Rechte Flanke | 54 |
| Rechte Flanke vorbearbeitet | 54v |
| Rechte Flanke fertig bearbeitet | 54f |
| Zahnfuss | 55 |
| | |
| Wälzschälwerkzeug | 100 |
| Messerkopfgrundkörper | 110 |
| | |
| Schneidzähne / Schneidköpfe | 111 |
| zweite Flankenschneide / linke Flankenschneide | 112 |
| erste Flankenschneide / rechte Flankenschneide | 113 |
| Kopfschneide | 114 |
| | |
| Messerstäbe | 120 |
| Spanfläche | 121 |
| | |
| Werkzeugspindel | 170 |
| | |
| Werkstückspindel | 180 |
| | |
| Maschine | 200 |
| CNC-Steuerung | 201 |
| kommunikationstechnische Verbindung | 202 |
| Vertikaler Bewegungsanteil | 204 |
| Schlitten | 205 |
| Linearverschiebung | 206 |
| Schwenkbewegung | 207 |
| Lineare Horizontalbewegung | 208 |
| | |
| Auslegungspunkt | AP |
| Berührpunkt | BP |
| Schrägungswinkel des Werkzeugs | β₁ |
| Schrägungswinkel des Werkstücks | β₂ |
| Neigungswinkel (nicht in den Figuren gezeigt) | δ |
| Gedachte Lückenmitte | LM |
| Mittellinie | ML |
| Rotationsachse des Werkzeugs (Werkzeugachse) | R1 |
| Rotationsachse des Werkstücks (Werkstückachse) | R2 |
| | |
| erste Relativposition | RP1 |
| zweite Relativposition | RP2 |
| dritte Relativposition | RP3 |
| vierte Relativposition | RP4 |
| | |
| Schwenkachse | SA |
| Hubbewegung | sₕₓ |
| Axialvorschub | sₐₓ |
| Differentialvorschub | s_{D} |
| Radialvorschub | s_{rad} |
| Schnittrichtung | SR |
| Achskreuzwinkel | Σ |
| Vorschubbewegung | VB |
| Vorschubrichtung | VR |
| Betrag der Schnittgeschwindigkeit | *v_{c}* |
| Schnittgeschwindigkeitsvektor | *̅v̅*̅_{c} |
| Geschwindigkeitsvektor Wälzschälwerkzeug | *̅v̅*̅₁ |
| Geschwindigkeitsvektor Werkstück | *̅v̅*̅₂ |
| Rotation um die Achse R1 | ω1 |
| Rotation um die Achse R2 | ω2 |

## Patentansprüche

1. Verfahren zum Wälzschälen eines ersten Werkstücks (50.1) und eines zweiten Werkstücks (50.2) mit rotationssymmetrischen, periodischen Strukturen unter Einsatz eines Wälzschälwerkzeugs (100), mit den folgenden Schritten:
- Bereitstellen des ersten Werkstücks (50.1),
▪ Anfahren einer ersten Relativposition (RP1) des Wälzschälwerkzeugs (100) in Bezug zum ersten Werkstück (50.1),
▪ Ausführen einer ersten Wälzschälbearbeitung des ersten Werkstücks (50.1), wobei während der ersten Wälzschälbearbeitung entweder alle rechten Flanken (54) oder alle linken Flanken (53) der periodischen Struktur des ersten Werkstücks (50.1) fertig bearbeitet und die jeweils anderen Flanken (53; 54) vorbearbeitet werden,
▪ Anfahren einer zweiten Relativposition (RP2) des Wälzschälwerkzeugs (100) in Bezug zum ersten Werkstück (50.1),
▪ Ausführen einer zweiten Wälzschälbearbeitung des ersten Werkstücks (50.1), wobei während der zweiten Wälzschälbearbeitung diejenigen Flanken (53; 54) der periodischen Struktur des ersten Werkstücks (50.1) fertig bearbeitet werden, die zuvor während der ersten Wälzschälbearbeitung nur vorbearbeitet wurden,
- Bereitstellen des zweiten Werkstücks (50.2),
▪ Anfahren einer dritten Relativposition (RP3) des Wälzschälwerkzeugs (100) in Bezug zum zweiten Werkstück (50.2),
▪ Ausführen einer dritten Wälzschälbearbeitung des zweiten Werkstücks (50.2), wobei während der dritten Wälzschälbearbeitung
- entweder alle rechten Flanken (54) der periodischen Struktur des zweiten Werkstücks (50.2) fertig bearbeitet und alle linken Flanken (53) vorbearbeitet werden, falls beim Ausführen der ersten Wälzschälbearbeitung am ersten Werkstück (50.1) alle linken Flanken (53) der periodischen Struktur fertig bearbeitet wurden,
- oder alle linken Flanken (53) der periodischen Struktur des zweiten Werkstücks (50.2) fertig bearbeitet und alle rechten Flanken (54) vorbearbeitet werden, falls beim Ausführen der ersten Wälzschälbearbeitung am ersten Werkstück (50.1) alle rechten Flanken (54) der periodischen Struktur fertig bearbeitet wurden,
▪ Anfahren einer vierten Relativposition (RP4) des Wälzschälwerkzeugs (100) in Bezug zum zweiten Werkstück (50.2),
▪ Ausführen einer vierten Wälzschälbearbeitung des zweiten Werkstücks (50.2), wobei während der vierten Wälzschälbearbeitung diejenigen Flanken (53; 54) der periodischen Struktur des zweiten Werkstücks (50.2) fertig bearbeitet werden, die zuvor während der dritten Wälzschälbearbeitung nur vorbearbeitet wurden.

2. Verfahren nach Anspruch 1, wobei die erste Wälzschälbearbeitung und die zweite Wälzschälbearbeitung des ersten Werkstücks (50.1) folgende Schritte umfasst:
- Drehen des Wälzschälwerkzeugs (100) um eine erste Rotationsachse (R1),
- gekoppeltes Drehen des ersten Werkstücks (50.1) um eine zweite Rotationsachse (R2), und
- Ausführen einer axialen Vorschubbewegung (VB) des Wälzschälwerkzeugs (100) in Bezug zu dem ersten Werkstück (50.1) in einer Richtung parallel zur zweiten Rotationsachse (R2).

3. Verfahren nach Anspruch 1 oder 2, wobei die dritte Wälzschälbearbeitung und die vierte Wälzschälbearbeitung des zweiten Werkstücks (50.2) folgende Schritte umfasst:
- Drehen des Wälzschälwerkzeugs (100) um eine erste Rotationsachse (R1),
- gekoppeltes Drehen des zweiten Werkstücks (50.2) um eine zweite Rotationsachse (R2), und
- Ausführen einer axialen Vorschubbewegung (VB) des Wälzschälwerkzeugs (100) in Bezug zu dem zweiten Werkstück (50.2) in einer Richtung parallel zur zweiten Rotationsachse (R2).

4. Verfahren nach Anspruch 1, 2 oder 3, **dadurch gekennzeichnet, dass** das Wälzschälwerkzeug (100) mehrere Schneidzähne (111) umfasst, wobei jeder der Schneidzähne (111) eine erste Flankenschneide (113) zum Schneiden der rechten Flanken (54), eine zweite Flankenschneide (112) zum Schneiden der linken Flanken (53) und eine Kopfschneide (114) umfasst, die in einem Übergangsbereich zwischen der ersten Flankenschneide (113) und der zweiten Flankenschneide (112) liegt.

5. Verfahren nach Anspruch 4, **dadurch gekennzeichnet, dass** die Wälzschälbearbeitungen des ersten Werkstücks (50.1) und des zweiten Werkstücks (50.2) so ausgeführt werden, dass die Anzahl der Schnitte, die mit den ersten Flankenschneiden (113) und die Anzahl der Schnitte, die mit den zweiten Flankenschneiden (112) ausgeführt werden in etwa gleich sind.

6. Verfahren nach Anspruch 4 oder 5, **dadurch gekennzeichnet, dass** die Kopfschneide (114) eine Breite hat, die kleiner ist als die Lückenweite am Zahnfuss (55) der am ersten Werkstück (50.1) und am zweiten Werkstück (50.2) zu fertigenden Lücken (52), wobei vorzugsweise die Kopfschneide (114) eine Breite hat, die kleiner gleich 2/3 der Lückenweite am Zahnfuss (55) ist.

7. Verfahren nach einem der vorhergehenden Ansprüche 1 - 6, **dadurch gekennzeichnet, dass** sich mindestens zwei der Relativpositionen (RP1, RP2, RP3, RP4) durch eine Winkeldrehung des ersten Werkstücks (50.1) oder des zweiten Werkstücks (50.2) unterscheiden.

8. Verfahren nach einem der vorhergehenden Ansprüche 1 - 6, **dadurch gekennzeichnet, dass** die zweite Relativposition (RP2) der dritten Relativposition (RP3) und die erste Relativposition (RP1) der vierten Relativposition (RP4) entsprechen.

9. Verfahren nach einem der vorhergehenden Ansprüche 1 - 8, **dadurch gekennzeichnet, dass** die Wälzschälbearbeitungen an weichen, d.h. an ungehärteten Werkstücken (50.1, 50.2) ausgeführt werden.

10. Maschine (200) mit einer CNC-Steuerung (201), die programmiert ist, um ein Verfahren nach einem der vorhergehenden Ansprüche 1 - 9 auszuführen.

11. Maschine (200) nach Anspruch 10, **dadurch gekennzeichnet, dass** sie ein Softwaremodul umfasst, das so programmiert ist, dass beim Wälzschälen ein alternierender Semi-Completing Ansatz vorgebbar ist, um für eine möglichst gleichmäßige Schnittbelastung von Schneiden (112, 113, 114) des Wälzschälwerkzeugs (100) zu sorgen.

## Claims

1. A method for skiving a first workpiece (50.1) and a second workpiece (50.2) having rotationally-symmetrical, periodic structures while using a skiving tool (100), having the following steps:
- providing the first workpiece (50.1),
o approaching a first relative position (RP1) of the skiving tool (100) in relation to the first workpiece (50.1),
o executing a first skiving machining of the first workpiece (50.1), wherein during the first skiving machining, either all right flanks (54) or all left flanks (53) of the periodic structure of the first workpiece (50.1) are finish machined and the respective other flanks (53; 54) are premachined,
∘ approaching a second relative position (RP2) of the skiving tool (100) in relation to the first workpiece (50.1),
∘ executing a second skiving machining of the first workpiece (50.1), wherein during the second skiving machining, the flanks (53; 54) of the periodic structure of the first workpiece (50.1) are finish machined, which were previously only premachined during the first skiving machining,
- providing the second workpiece (50.2),
∘ approaching a third relative position (RP3) of the skiving tool (100) in relation to the second workpiece (50.2),
∘ executing a third skiving machining of the second workpiece (50.2), wherein during the third skiving machining,
▪ either all right flanks (54) of the periodic structure of the second workpiece (50.2) are finish machined and all left flanks (53) are premachined, if, during execution of the first skiving machining on the first workpiece (50.1), all left flanks (53) of the periodic structure were finish machined,
▪ or all left flanks (53) of the periodic structure of the second workpiece (50.2) are finish machined and all right flanks (54) are premachined, if, during execution of the first skiving machining on the first workpiece (50.1), all right flanks (54) of the periodic structure were finish machined,
∘ approaching a fourth relative position (RP4) of the skiving tool (100) in relation to the second workpiece (50.2),
∘ executing a fourth skiving machining of the second workpiece (50.2), wherein during the fourth skiving machining, the flanks (53; 54) of the periodic structure of the second workpiece (50.2) are finish machined, which were previously only premachined during the third skiving machining.

2. Method according to claim 1, wherein the first skiving machining and the second skiving machining of the first workpiece (50.1) comprise the following steps:
- rotating the skiving tool (100) about a first rotational axis (R1),
- coupled rotating of the first workpiece (50.1) about a second rotational axis (R2), and
- executing an axial feed movement (VB) of the skiving tool (100) in relation to the first workpiece (50.1) in a direction parallel to the second rotational axis (R2).

3. Method according to claim 1 or 2, wherein the third skiving machining and the fourth skiving machining of the second workpiece (50.2) comprise the following steps:
- rotating the skiving tool (100) about a first rotational axis (R1),
- coupled rotating of the second workpiece (50.2) about a second rotational axis (R2), and
- executing an axial feed movement (VB) of the skiving tool (100) in relation to the second workpiece (50.2) in a direction parallel to the second rotational axis (R2).

4. Method according to claim 1, 2, or 3, **characterized in that** the skiving tool (100) comprises multiple cutting teeth (111), wherein each of the cutting teeth (111) comprises a first flank cutting edge (113) for cutting the right flanks (54), a second flank cutting edge (112) for cutting the left flanks (53), and a head cutting edge (114), which lies in a transition region between the first flank cutting edge (113) and the second flank cutting edge (112).

5. Method according to claim 4, **characterized in that** the skiving machinings of the first workpiece (50.1) and the second workpiece (50.2) are executed such that the number of cuts which are executed using the first flank cutting edges (113) and the number of cuts which are executed using the second flank cutting edges (112) are approximately equal.

6. Method according to claim 4 or 5, **characterized in that** the head cutting edge (114) has a width which is less than the gap width at the tooth base (55) of the gaps (52) to be manufactured on the first workpiece (50.1) and on the second workpiece (50.2), wherein preferably the head cutting edge (114) has a width which is less than or equal to two-thirds of the gap width at the tooth base (55).

7. Method according to one of preceding claims 1 to 6, **characterized in that** at least two of the relative positions (RP1, RP2, RP3, RP4) differ by an angular rotation of the first workpiece (50.1) or the second workpiece (50.2).

8. Method according to one of preceding claims 1 to 6, **characterized in that** the second relative position (RP2) corresponds to the third relative position (RP3) and the first relative position (RP1) corresponds to the fourth relative position (RP4).

9. Method according to one of preceding claims 1 to 8, **characterized in that** the skiving machinings are executed on soft workpieces, i.e., on untempered workpieces (50.1, 50.2).

10. A machine (200) having a CNC controller (201), which is programmed to execute a method according to one of preceding Claims 1 to 9.

11. Machine (200) according to claim 10, **characterized in that** it comprises a software module, which is programmed such that during the skiving, an alternating semi-completing approach can be specified, to ensure the most uniform possible cutting load of cutting edges (112, 113, 114) of the skiving tool (100).

## Revendications

1. Procédé de rabotage à la fraise-mère d'une première pièce (50.1) et d'une seconde pièce (50.2) avec des structures périodiques à symétrie de rotation en utilisant un outil de décolletage (100), comportant les étapes suivantes :
- Préparation d'une première pièce (50.1),
* déplacement vers une première position relative (RP1) de l'outil de décolletage (100) par rapport à la première pièce (50.1),
* exécution d'un premier usinage de rabotage à la fraise-mère de la première pièce (50.1), dans lequel pendant le premier usinage de rabotage à la fraise-mère, tous les flancs de droite (54) ou tous les flancs de gauche (53) de la structure périodique de la première pièce (50.1) sont usinés et les autres flancs respectifs (53 ; 54) sont pré-usinés,
* déplacement vers une seconde position relative (RP2) de l'outil de rabotage à la fraise-mère (100) par rapport à la première pièce (50.1),
* exécution d'un second usinage de rabotage à la fraise-mère de la première pièce (50.1), dans lequel pendant le second usinage de rabotage à la fraise-mère, les flancs respectifs (53 ; 54) de la structure périodique de la première pièce (50.1) qui avaient précédemment uniquement été pré-usinés pendant le premier usinage de rabotage à la fraise-mère, sont usinés,
- Préparation de la seconde pièce (50.2),
* déplacement vers une troisième position relative (RP3) de l'outil de rabotage à la fraise-mère (100) par rapport à la seconde pièce (50.2),
* exécution d'un troisième usinage de rabotage à la fraise-mère de la seconde pièce (50.2), dans lequel pendant le troisième usinage de rabotage à la fraise-mère
- tous les flancs de droite (54) de la structure périodique de la seconde pièce (50.2) sont usinés et tous les flancs de gauche (53) sont pré-usinés dans le cas où lors de l'exécution du premier usinage de rabotage à la fraise-mère sur la première pièce (50.1), tous les flancs de gauche (53) de la structure périodique avaient été usinés,
- ou tous les flancs de gauche (53) de la structure périodique de la seconde pièce (50.2) sont usinés et tous les flancs de droite (54) sont pré-usinés dans le cas où lors de l'exécution du premier usinage de rabotage à la fraise-mère sur la première pièce (50.1), tous les flancs de droite (54) de la structure périodique avaient été usinés,
* déplacement vers une quatrième position relative (RP4) de l'outil de rabotage à la fraise-mère (100) par rapport à la seconde pièce (50.2),
* exécution d'un quatrième usinage de rabotage à la fraise-mère de la seconde pièce (50.2), dans lequel pendant le quatrième usinage de rabotage à la fraise-mère, les flancs respectifs (53 ; 54) de la structure périodique de la seconde pièce (50.2) qui n'avaient été précédemment que pré-usinés lors du troisième usinage de rabotage à la fraise-mère sont usinés.

2. Procédé selon la revendication 1, dans lequel le premier usinage de rabotage à la fraise-mère et le second usinage de rabotage à la fraise-mère de la première pièce (50.1) comportent les étapes suivantes :
- pivotement de l'outil de rabotage à la fraise-mère (100) autour d'un premier axe de rotation (R1),
- pivotement couplé de la première pièce (50.1) autour d'un second axe de rotation (R2), et
- exécution d'un mouvement de poussée axial (VB) de l'outil de rabotage à la fraise-mère (100) vis-à-vis de la première pièce (50.1) dans une direction parallèle au second axe de rotation (R2).

3. Procédé selon la revendication 1 ou 2, dans lequel le troisième usinage de rabotage à la fraise-mère et le quatrième usinage de rabotage à la fraise-mère de la seconde pièce (50.2) comportent les étapes suivantes :
- pivotement de l'outil de rabotage à la fraise-mère (100) autour d'un premier axe de rotation (R1),
- pivotement couplé de la seconde pièce (50.2) autour d'un second axe de rotation (R2), et
- exécution d'un mouvement de poussée axial (VB) de l'outil de rabotage à la fraise-mère (100) vis-à-vis de la seconde pièce (50.2) dans une direction parallèle au second axe de rotation (R2).

4. Procédé selon la revendication 1, 2 ou 3, **caractérisé en ce que** l'outil de rabotage à la fraise-mère (100) comporte plusieurs dents coupantes (111), où chaque dent coupante (111) a une premier arête de coupe latérale (113) destiné à couper les flancs de droite (54), une second arête de coupe latérale (112) destiné à couper les flancs de gauche (53) et une arête de coupe de tête (114), qui repose dans une zone de transition entre la premier arête de coupe latérale (113) et la second arête de coupe latérale (112).

5. Procédé selon la revendication 4, **caractérisé en ce que** les usinages de rabotage à la fraise-mère de la première pièce (50.1) et de la seconde pièce (50.2) sont exécutés de façon telle que le nombre des coupes qui sont exécutées avec la premier arête de coupe latérale (113) et le nombre de coupes qui sont exécutées avec la second arête de coupe latérale (112) sont approximativement identiques.

6. Procédé selon la revendication 4 ou 5, **caractérisé en ce que** l'arête de coupe de tête (114) a une largeur qui est inférieure à la largeur d'entredent au niveau du pied de dent (55) des entredents (52) à usiner au niveau de la première pièce (50.1) et au niveau de la seconde pièce (50.2), l'arête de coupe de tête (114) ayant de préférence une largeur qui est inférieure ou égale à 2/3 de la largeur du creux au niveau du pied de dent (55).

7. Procédé selon l'une des revendications 1 à 6 précédentes, **caractérisé en ce qu'**au moins deux des positions relatives (RP1, RP2, RP3, RP4) se distinguent par une rotation angulaire de la première pièce (50.1) ou de la seconde pièce (50.2).

8. Procédé selon l'une des revendications 1 à 6 précédentes, **caractérisé en ce que** la deuxième position relative (RP2) correspond à la troisième position relative (RP3) et la première position relative (RP1) à la quatrième position relative (RP4).

9. Procédé selon l'une des revendications 1 à 8 précédentes, **caractérisé en ce que** les usinages de rabotage à la fraise-mère sont exécutés sur des pièces (50.1, 50.2) douces, à savoir non trempées.

10. Machine (200) comportant une commande CNC (201), qui est programmée pour exécuter un procédé selon l'une des revendications 1 à 9 précédentes.

11. Machine (200) selon la revendication 10, **caractérisée en ce qu'**elle comporte un module logiciel qui est programmé de façon telle que lors du rabotage à la fraise-mère, un processus de Semi-Completing en alternance est prédéfini afin de garantir une charge de coupe la plus régulière possible des lames (112, 113, 114) de l'outil de rabotage à la fraise-mère (100).
